(19) Europäisches Patentamt

European Patent Office

Office européen des brevets

(11) **EP 4 672 504 A1**

(12) **EUROPEAN PATENT APPLICATION**
published in accordance with Art. 153(4) EPC

(43) Date of publication:
**31.12.2025 Bulletin 2026/01**

(21) Application number: **24760157.8**

(22) Date of filing: **08.02.2024**

(51) International Patent Classification (IPC):
*H01Q 21/24* (2006.01)  *H01Q 9/16* (2006.01)
*H02J 50/20* (2016.01)

(52) Cooperative Patent Classification (CPC):
**H01Q 1/38; H01Q 5/48; H01Q 9/16; H01Q 9/26;
H01Q 21/06; H01Q 21/24; H01Q 23/00;
H02J 50/20; H02J 50/27; H02J 50/40**

(86) International application number:
**PCT/JP2024/004270**

(87) International publication number:
**WO 2024/176855 (29.08.2024 Gazette 2024/35)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority: **24.02.2023 JP 2023027784**

(71) Applicant: **Aeterlink Corp.
Tokyo 130-0013 (JP)**

(72) Inventors:
• **TANABE, Yuji**
  **Tokyo 130-0013 (JP)**
• **KUMAGAI, Ryosuke**
  **Tokyo 130-0013 (JP)**
• **KODATE, Naoto**
  **Tokyo 130-0013 (JP)**

(74) Representative: **Zimmermann & Partner
Patentanwälte mbB
P.O. Box 330 920
80069 München (DE)**

(54) **MULTI ANTENNA AND POWER RECEIVING DEVICE**

(57) This multi antenna comprises: a substrate; a first antenna element configured by two linear antennas arranged to surround one area of the substrate and extending from a first feeding point in two different directions; a second antenna element configured by two linear antennas extending from a second feeding point in two different directions; and a connecting line connecting the first feeding point of the first antenna element and the first feeding point of the second antenna element. The connecting line is connected to the first feeding point of the first antenna element along a bisector of an interior angle having the first feeding point of the first antenna element as an apex, and the connecting line is connected to the second feeding point of the second antenna element along a bisector of an interior angle having the second feeding point of the second antenna element as an apex.

*FIG. 5*

## Description

TECHNICAL FIELD

The present invention relates to a multi-antenna and a power-receiving device.

BACKGROUND ART

In recent years, wireless power transfer (WPT) has been used in various fields. By utilizing WPT, problems such as wiring burden, breakage, and maintenance can be avoided, as compared to wired power transfer.

Typically, on the power-receiving device side of a WPT system, a linear antenna such as a dipole antenna is used to receive the transmitted energy. Normally, when a single linear antenna is used, it is difficult to secure a sufficient amount of received power or directivity, so a plurality of linear antennas or a multi-antenna is used.

When using a multi-antenna, it is necessary to optimize the number of antennas, a distance between the antennas, a direction, connection, and the like. Otherwise, there is a risk that electromagnetic coupling or the like may occur, which may lower the power reception efficiency. The optimal combination depends greatly on the environment.

JP2010-41566A (Patent Literature 1) is known as background art in the present technical field. Patent Literature 1 discloses an example in which two dipole antennas are arranged in a cross shape.

International Publication No. WO2018-096740 (Patent Literature 2) is known as background art in the present technical field. Patent Literature 2 discloses an example in which two dipole antennas are arranged in a cross shape, each end portion side is formed in an arrow shape, and the shape is repeated in the vertical and horizontal directions.

CITATION LIST

PATENT LITERATURE

|  |  |
|---|---|
| Patent Literature 1: | JP2010-41566A |
| Patent Literature 2: | International Publication No. WO2018/096740 |

SUMMARY OF INVENTION

TECHNICAL PROBLEM

The present invention provides a multi-antenna having excellent reception performance and low manufacturing cost.

SOLUTION TO PROBLEM

A multi-antenna includes a substrate, a first antenna element including two linear antennas arranged to surround one region of the substrate and extending in two different directions from a first feeding point, a second antenna element including two linear antennas extending in two different directions from a second feeding point, and a connecting line connecting the first feeding point of the first antenna element and a first feeding point of the second antenna element, in which the connecting line is connected to the first feeding point of the first antenna element along a bisector of an internal angle formed with the first feeding point of the first antenna element as a vertex, and the connecting line is connected to the second feeding point of the second antenna element along a bisector of an internal angle formed with the second feeding point of the second antenna element as a vertex.

ADVANTAGEOUS EFFECTS OF INVENTION

The present invention provides a multi-antenna having excellent reception performance and low manufacturing cost.

BRIEF DESCRIPTION OF DRAWINGS

FIG. 1 is a diagram showing an overall configuration of a WPT system.

FIG. 2 is a block diagram showing a configuration example of a power-transmitting device and a power-receiving device.

FIG. 3 is a top view and a side view of a main body of a power-receiving device 1, 2.

FIG. 4 is a top view of a substrate 10 built in the main body of the power-receiving device 1.

FIG. 5 is a perspective view of a single unit of a multi-antenna arranged on an FPC.

FIG. 6 is a diagram showing a configuration of a first embodiment of the multi-antenna (first embodiment).

FIG. 7 is a diagram showing a configuration of a second embodiment of the multi-antenna (first embodiment).

FIG. 8 is a plan view showing a plurality of combinations of the multi-antenna (first embodiment).

FIG. 9 is a diagram showing a configuration of a modification of the multi-antenna (first embodiment).

FIG. 10 is a diagram showing a configuration of a first embodiment of the multi-antenna (second embodiment).

FIG. 11 is a diagram showing a configuration of a second embodiment of the multi-antenna (second embodiment).

FIG. 12 is a diagram showing a configuration of a third embodiment of the multi-antenna (second embodiment).

FIG. 13 is a plan view showing a plurality of combinations of the multi-antenna (second embodiment).

FIG. 14 is a diagram showing a configuration of a modification of the multi-antenna (second embodiment).

FIG. 15 shows a connection relationship among an antenna element, a connecting line, and a rectifier.

FIG. 16 is diagram showing a configuration of an interface substrate (third embodiment) and an example of application of the interface substrate to a multi-antenna including a plurality of linear antennas.

FIG. 17 is a table comparing substrates to which a multi-antenna can be applied.

FIG. 18 is an example showing radiation efficiencies of various multi-antennas as (1) to (3).

FIG. 19 is a diagram schematically showing an example in which a power-receiving device is applied in the field of building management, and use aspects of the power-receiving device.

## DESCRIPTION OF EMBODIMENTS

Hereinafter, embodiments of the present invention will be described with reference to the drawings. Note that the following embodiments are merely examples of embodiments used to explain the present invention. It should be understood that the present invention is not to be construed as being limited by the following description.

In recent years, WPT (Wireless Power Transmission or Wireless Power Transfer) has been used in various fields so as to transmit energy to PCs, sensors, actuators, robots, devices, and the like.

For example, in a WPT system, energy is transmitted between a power-transmitting device and a power-receiving device using microwaves.

In general, in the power-receiving device, a linear antenna such as a dipole antenna is used to receive energy transmitted from the power-transmitting device.

In order to efficiently transmit and receive energy based on WPT, it is necessary to consider various challenges. For example, on the power-transmitting device side, it is necessary to consider physical constraints, such as attenuation of radio waves during transmission in free space. Additionally, it is necessary to consider legal restrictions, such as the regulation that limits the upper bound of transmitted power to 1 W.

On the other hand, such legal restrictions are relaxed on the power-receiving device side. However, there are specific challenges on the power-receiving device side, as described below.

"Electrical Challenges"

When receiving energy using a single antenna, it may be difficult to obtain a sufficient amount of received power or directivity in order to operate a sensor and the like. On the other hand, when using a multi-antenna, it is necessary to optimize the number of antennas, a distance between the antennas, a direction, connection, and the like. Otherwise, the power reception efficiency of the multi-antenna is lowered.

"Physical Challenges"

In order to arrange and maintain a multi-antenna within the power-receiving device, a housing may be used to optimize the arrangement. However, when a flexible substrate is used as a housing material, there is a physical challenge in that it is vulnerable to heat and strong stress. Therefore, it is necessary to prevent the arrangement of multi-antenna from being damaged due to such heat or strong stress.

"Environmental Challenges"

There is a risk that the appearance may be impaired if the multi-antenna is arranged in such a manner as to be exposed or protrude in the surrounding environment. In general, there is a trade-off relationship between the amount of received power of a multi-antenna (optimally arranging a plurality of antennas over a large surface area) and appearance (making the antennas unnoticeable to humans). Therefore, it is preferable to integrate the multi-antenna with the surrounding environment so as not to appear unnatural.

"Manufacturing Challenges"

In general, a multi-antenna with a small component mounting area and a large substrate area tends to have a higher manufacturing cost. In addition, if each linear antenna and the like used in a multi-antenna cannot be uniformly applied, there is a concern that the efficiency of mass production may be impaired. Therefore, it is preferable to configure the multi-antenna such that the burden in terms of manufacturing is reduced.

"Legal Issues"

As described above, there are cases where upper limits are defined for the transmission power and the transmission antenna gain. However, there are cases where strict regulations are not imposed on the power-receiving device side, and no upper limit is defined for the number of power-receiving antennas. However, it is preferable to improve the power reception efficiency between the power-transmitting device and the power-receiving device with an understanding of the issues on the transmission side.

"Challenges in Field of Building Management"

When a power-receiving device is used in the field of building management (comprehensive management of buildings such as office buildings or commercial facilities), the size of the reception antenna is relatively unlikely to be restricted. However, since the distance between the power-transmitting device and the power-receiving device tends to be relatively long, it is required to improve the power reception efficiency. In addition, there is an increasing demand for integrating the power-receiving antenna into the surrounding environment.

In view of these various perspectives, the present applicant has devised multi-antennas used in a WPT power-receiving device so that favorable performance is achieved (first embodiment) and (second embodiment). In addition, the present applicant has provided an interface substrate for assisting in the arrangement and connection of each linear antenna (third embodiment).

In general, an antenna with a plurality of elements aligned is called an array antenna. Typically, in an array antenna, elements of the same shape and dimensions are arranged. Desired characteristics such as an amount of received power and directivity can be designed according to the number of elements, the installation method, and the like.

In general, an array antenna radiates strongly in a specific direction. The intensity of the received radio waves decreases approximately in inverse proportion to the distance.

In addition, generally, an array antenna adjusts lengths of the elements to minimize the phase difference of the current and to allow a strong and uniform current to flow.

The element is configured as a linear antenna, such as a dipole antenna, made of, for example, a copper wire.

In general, a dipole antenna can be simplified as a single wire. A dipole antenna is a balanced circuit in which the left and right sides have the same length, and the magnitudes of the currents flowing to the left and right are equal.

In addition, generally, a resonance phenomenon occurs and the strongest current flows when the length of the dipole antenna is approximately half the wavelength.

In general, a dipole antenna is also called a $1/2\lambda$ (half-wavelength) dipole antenna, and its length d can be obtained based on the operating frequency f (Hz), as follows.

$$d=3\times108/2f(m)$$

However, the calculation formula for calculating d is not limited to the above formula. For example, in order to eliminate inductive reactance, the length of the element is often suppressed within the range of 96% to 97%.

$$D=\{3\times108/2f\}\times(0.96 \text{ to } 0.97)(m)$$

In this way, the dipole antenna is designed as a resonant antenna and as an electric field detection type based on the wavelength of the operating frequency. However, when provided on a substrate of an electric circuit, the wavelength shortening rate may vary depending on the thickness or relative permittivity of the dielectric layer of the substrate. In addition, the formula for calculating d can be modified depending on the method of arranging the dipole antenna and the like.

Although the multi-antenna according to the present example is generally based on the design concept of an array antenna, a unique approach has been devised for the arrangement and connection of the elements.

The application of the multi-antenna according to the present example enables securing a sufficient amount of received power and directivity to operate a sensor or the like. In this case, each linear antenna is efficiently connected, and issues such as electromagnetic coupling are suppressed by means of the distance, orientation, connection, and the like between the respective linear antennas.

By arranging a plurality of such basic aspects, a sufficient amount of received power and directivity are secured, thereby improving radiation efficiency.

Further, when connecting a multi-antenna via a DC output connector or a DC connecting line (hereinafter simply referred to as a connecting line), the connecting line is arranged along a bisector of an internal angle formed by two adjacent linear antennas, thereby preventing any adverse effects on the antennas.

Furthermore, by using an interface substrate, efficient arrangement and connection of the linear antennas and connecting lines constituting a multi-antenna are achieved.

<Basic configuration of WPT system>

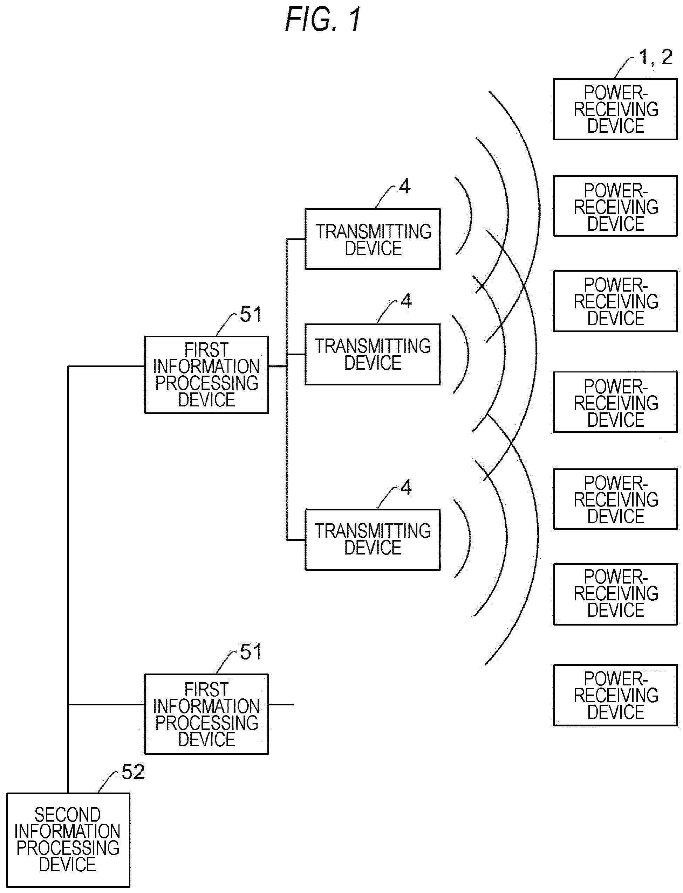

FIG. 1 is a diagram showing an overall configuration of a WPT system according to the present embodiment.

The WPT system shown in FIG. 1 includes, for example, a power-transmitting device 4, a power-receiving device 1, 2, a first information processing device 61, and a second information processing device 62. The WPT system shown in FIG. 1 is used, for example, in buildings, factories, or the like. Note that the connection between the power-transmitting device 4 and the first information processing device 61 and the connection between the first information processing device 61 and the second information processing device 62 may be either wired or wireless.

In FIG. 1, an example is shown in which the WPT system includes three power-transmitting devices 4. However, the number of power-transmitting devices 4 included in the WPT system is not limited to three. The number of power-transmitting devices 4 included in the WPT system may be 2 or less, or 4 or more.

In FIG. 1, an example is shown in which the WPT system includes seven power-receiving devices 1, 2. However, the number of power-receiving devices 1, 2 included in the WPT system is not limited to seven. The number of power-receiving devices 1, 2 included in the WPT system may be 6 or less, or 4 or more.

In FIG. 1, an example is shown in which the WPT system includes two first information processing devices 61. However, the number of first information processing devices 61 included in the WPT system is not limited to two. The number of first information processing devices 61 included in the WPT system may be one, or three or more.

The power-transmitting device 4 is configured to transmit, for example, a power supply signal or a data signal to the power-receiving device 1, 2. The power-transmitting device 4 is configured to transmit the power supply signal to the power-receiving device 1, 2 by radio waves in the 920 MHz band, for example. The power-transmitting device 4 is configured to transmit the data signal to the power-receiving device 1, 2 by radio waves in the 2.4 GHz band, for example. The power-transmitting device 4 may be configured to transmit the data signal by radio waves in the 920 MHz band.

The power-transmitting device 4 may be configured to transmit the power supply signal to one power-receiving device 1, 2, or may be configured to transmit the power supply signal to a plurality of power-receiving devices 1, 2, for example. The power-transmitting device 4 may be configured to transmit the power supply signal to one power-receiving device 1, 2, or may be configured to transmit the power supply signal to a plurality of power-receiving devices 1, 2, for example. The power-transmitting device 4 may be configured to transmit the same data signal as that of another power-transmitting device 4, or may be configured to transmit a different data signal from that of another power-transmitting device 4, for example. The power-transmitting device 4 may be configured to transmit a predetermined command signal to the power-receiving device 1, 2 as the data signal, or may be configured to transmit a preset signal to the power-receiving device 1, 2 as the data signal, for example.

The power-transmitting device 4 is configured to receive, for example, a data signal transmitted from the power-receiving device 1, 2. The power-transmitting device 4 may be configured to receive a data signal transmitted from one power-receiving device 1, 2, or may be configured to receive data signals transmitted from a plurality of power-receiving devices 1, 2, for example. The power-transmitting device 4 is configured to transmit the data signal transmitted from the power-receiving device 1, 2 to the first information processing device 61. The power-transmitting device 4 is configured to transmit information regarding a state of the power-transmitting device 4 to the first information processing device 61.

The power-receiving device 1, 2 is configured to receive, for example, the power supply signal or data signal transmitted from the transmitting device 4. When the power-receiving device 1, 2 includes, for example, a power storage unit, the power-receiving device converts the power supply signal transmitted from the transmitting device 4 into power and stores the converted power in the power storage unit. When the power-receiving device 1, 2 includes, for example, a predetermined sensor, the power-receiving device converts the power supply signal transmitted from the transmitting device 4 into power and drives the sensor with the converted power. For the power storage unit, a battery, a capacitor, or the like may be used.

The power-receiving device 1, 2 is configured to transmit, for example, information regarding a state of the power-receiving device 1, 2, or information regarding a measurement result by the sensor, to the transmitting device 4 as a data signal.

The first information processing device 61 is an information processing device that monitors the operations of the power-transmitting device 4 and the power-receiving device 1, 2 accommodated in the WPT system. For example, the first information processing device 61 determines whether the power-transmitting device 4 or the power-receiving device 1, 2 is in a preset state, based on the information regarding the states of the power-transmitting device 4 and the power-receiving device 1, 2 transmitted from the power-transmitting device 4. When it is determined that the power-transmitting device 4 or the power-receiving device 1, 2 is in the preset state, the first information processing device 61 transmits predetermined information to the second information processing device 62.

Additionally, the first information processing device 61 is configured to accumulate the information regarding the power-transmitting device 4 and the power-receiving device 1, 2 accommodated in the WPT system. For example, the first information processing device 61 is configured to store the information regarding the states of the power-transmitting device 4 and the power-receiving device 1, 2 transmitted from the power-transmitting device 4 in a storage unit provided in the first information processing device 61.

Additionally, the first information processing device 61 is configured to control the operation of the power-transmitting device 4 accommodated in the WPT system.

Additionally, the first information processing device 61 is configured to control the operation of the power-transmitting device 4 accommodated in the WPT system. For example, the first information processing device 61 is configured to transmit a predetermined instruction or information to the power-transmitting device 4.

Additionally, the first information processing device 61 is configured to control the operation of the second information processing device 62.

The second information processing device 62 is, for example, an information processing device that is operated by an administrator of the WPT system. When the second information processing device 62 receives, from the first information processing device 61, a notification to the effect that the power-transmitting device 4, the power-receiving device 1, 2, or both accommodated in the WPT system are in a predetermined state, the second information processing device presents, to a user, information indicating that the power-transmitting device 4, the power-receiving device 1, 2, or both are in the predetermined state.

In addition, the second information processing device 62 is configured to analyze the information regarding the states of the power-transmitting device 4 and the power-receiving device 1, 2 stored in the first information processing device 61, and present predetermined information to the user. The predetermined information includes, for example, the following:

Information regarding the placement of the power-transmitting device 4
Information on the placement of the power-receiving device 1, 2
Information regarding power consumption
Information regarding power intensity

<Basic Configurations of Power-Transmitting Device and Power-Receiving device>

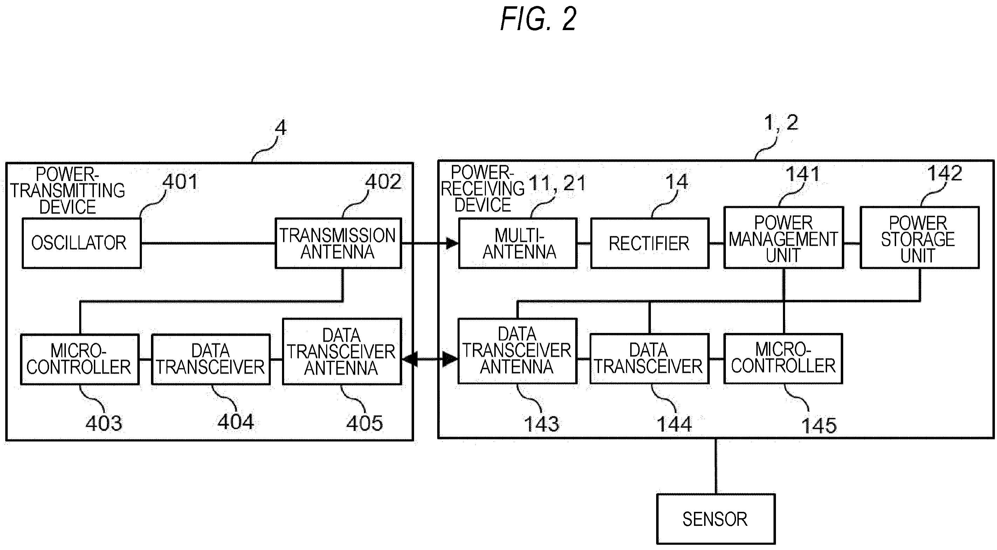

FIG. 2 is a block diagram showing a configuration example of the power-transmitting device 4 and the power-receiving device 1, 2 shown in FIG. 1. As shown in FIG. 2, the power-transmitting device 4 and the power-receiving device 1, 2 are spaced apart from each other by, for example, a predetermined interval. For example, the power-transmitting device 4 and power-receiving device 1, 2 are installed spaced apart from each other by a distance of several meters. Specifically, for example, the power-transmitting device 4 is fixedly installed at an elevated position indoors, such as on the ceiling or at a predetermined high position provided on a wall. The power-receiving device 1, 2 is installed on a predetermined device indoors or placed near a device requiring power supply. Additionally, the power-receiving device 1, 2 may be carried by the user. The power-transmitting device 4 is configured to transmit the power supply signal to the power-receiving device 1, 2 by radio waves in a predetermined frequency band, for example, in the 920 MHz band. The power-receiving device 1, 2 is configured to convert the power supply signal transmitted from the power-transmitting device 4 into power, and stores the converted power or supplies the converted power to a predetermined device.

The power-transmitting device 4 includes, for example, an oscillator 401, a transmission antenna 402, a microcontroller (controller or MCU) 403, a data transceiver 404, and a data transceiver antenna 405. The oscillator 401, the microcontroller 403, the data transceiver 404, the data transceiver antenna 405, or a combination of at least one of these may be mounted on, for example, a printed circuit board (PCB).

The oscillator 401 is configured to oscillate a signal in a predetermined frequency band, for example, in the 920 MHz band. The oscillated signal may be amplified, if necessary, to remove unnecessary frequency components.

The transmission antenna 402 is configured to efficiently transmit, for example, radio waves in the 920 MHz band. The transmission antenna 402 is configured to radiate a signal oscillated by the oscillator 401 as a power supply signal.

The microcontroller 403 is configured to control the operation of the power-transmitting device 4. The microcontroller 403 is implemented, for example, by a single-board computer equipped with an ARM processor. The microcontroller 403 is configured to control, for example, the transmission of radio waves by the transmission antenna 402.

The data transceiver 404 is configured to perform processing such as digital-to-analog conversion and modulation of analog data. In addition, the data transceiver 404 is configured to perform processing such as demodulation of a data signal received by the data transceiver antenna 405 and digitization of the demodulated data. The data transceiver 404 is configured to extract a predetermined signal from a data signal received by the data transceiver antenna 405, convert it into digital data, and transmit the converted digital data to the microcontroller 403, for example.

The data transceiver antenna 405 is configured to efficiently transmit and receive, for example, radio waves in the 2.4 GHz band. The data transceiver antenna 405 is configured to radiate a data signal supplied from the data transceiver 404. Additionally, the data transceiver antenna 405 is configured to receive a data signal transmitted from the power-receiving device 1, 2.

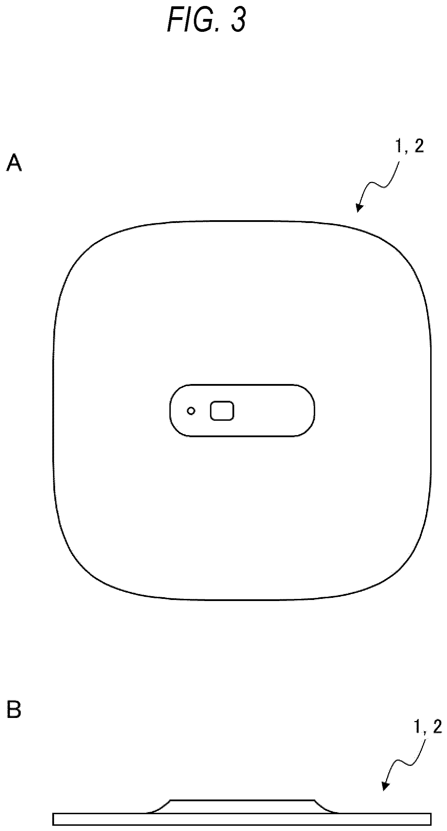

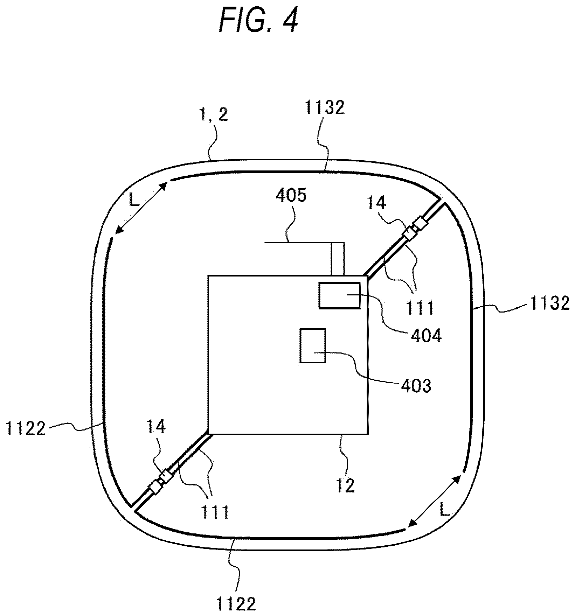

(A) in FIG. 3 is a top view of a main body of the power-receiving device 1. (B) in FIG. 3 is a side view of the main body of the power-receiving device 1. FIG. 4 is a top view of a substrate 10 built in the main body of the power-receiving device 1.

The power-receiving device 1 includes, for example, a multi-antenna 11, a rectifier 14, a power management unit 141, a power storage unit 142, a microcontroller 145, a data transceiver 144, and a data transceiver antenna 143. The multi-antenna 11, a connecting line 111, the rectifier 14, the power management unit 141, the power storage unit 142, the microcontroller 145, the data transceiver 144, the data transceiver antenna 143, or a combination of at least one of these may be mounted on a PCB or a flexible printed circuit (FPC, flexible substrate), for example. In addition, the power management unit 141, the power storage unit 142, the microcontroller 145, the data transceiver 144, and the data transceiver antenna 143, which are arranged on the substrate 10, form a circuit 12 as a whole.

The multi-antenna 11 is configured to efficiently receive, for example, radio waves in the 920 MHz band. The multi-antenna 11 is configured to receive a power supply signal radiated from the transmission antenna 402.

The rectifier 14 is configured to rectify the radio waves received as a power supply signal and convert the same into a direct current voltage.

The power management unit 141 is configured to manage a direct current voltage. For example, the power management unit 141 is configured to control a charging voltage based on the direct current voltage. The power management unit 141 is configured to charge the power storage unit 142 by controlling the charging voltage. In addition, the power management unit 141 is configured to supply a DC voltage to a connected member when an amount of power stored in the power storage unit 142 is equal to or greater than a predetermined amount, for example.

Additionally, the power management unit 141 is configured to discharge the power stored in the power storage unit 142 in accordance with control from the microcontroller 145.

The power storage unit 142 is configured to store power in accordance with an instruction from the power management unit 141. Additionally, the power storage unit 142 is configured to discharge the stored power in accordance with an instruction from the power management unit 141.

The microcontroller 145 is configured to control the operation of the power-receiving device 1, 2. The microcontroller 145 is driven by a direct current voltage supplied from the power management unit 141 or by power stored in the power storage unit 142. The microcontroller 145 is configured to control the power management unit 141 to discharge power stored in the power storage unit 142.

The power-receiving device 1, 2 may be connected to, for example, various sensors. For example, a heat sensor, a temperature sensor, a light sensor, a humidity sensor, a vibration sensor, and the like are connected to the power-receiving device 1, 2. The sensor connected to the power-receiving device 1, 2 is driven by, for example, a direct current voltage supplied from the power management unit 141 or power discharged from the power storage unit 142. The microcontroller 145 is configured to continuously or intermittently monitor a voltage value at a predetermined portion of the power-receiving device 1, 2, a status of the sensor connected to the power-receiving device 1, 2, information detected by the sensor, and the like. The microcontroller 145 is configured to transmit a voltage value at a predetermined portion of the power-receiving device 1, 2, a status of the sensor connected to the power-receiving device 1, 2, information detected by the sensor, and the like to the data transceiver 144 as digital data. Note that the sensor may be built in the power-receiving device 1, 2.

The data transceiver 144 is configured to perform processing such as conversion of digital data supplied from the microcontroller 145 into analog data and modulation of analog data. In addition, the data transceiver 144 is configured to perform processing such as demodulation of a data signal received by the data transceiver antenna 143 and digitization of the demodulated data. The data transceiver 144 is driven by, for example, a direct current voltage supplied from the power management unit 141, or power discharged from the power storage unit 142.

The data transceiver antenna 143 is configured to efficiently transmit and receive, for example, radio waves in the 2.4 GHz band. The data transceiver antenna 143 is configured to radiate a data signal supplied from the data transceiver 144. Additionally, the data transceiver antenna 143 is configured to receive a data signal transmitted from the power-transmitting device 4. For example, the data transceiver antenna 143 is driven by, for example, a direct current voltage supplied from the power management unit 141 or power discharged from the power storage unit 142.

<Power-Receiving Device (first embodiment)>

The configuration of the power-receiving device 1 according to first embodiment will be described below.

The power-receiving device 1 is a power-receiving device configured to receive energy transmitted wirelessly in a three-dimensional space based on wireless power transfer (WPT). Specifically, the power-receiving device 1 is a WPT power-receiving device used to receive energy transmitted from a power-transmitting device using microwaves.

The power-receiving device 1 includes a main body, the substrate 10 built in the main body, the multi-antenna 11 built in the main body, a circuit 12 for enabling a function of the multi-antenna 11 built in the main body, and a device 13. The power-receiving device 1 is configured to receive microwaves transmitted from a power-transmitting device via the multi-antenna 11, and supply power to the circuit 12, the device 13, and the like. The circuit 12 is functionally coupled with the rectifier 14. The circuit 12 is connected to the multi-antenna 11 via the rectifier 14.

The multi-antenna 11 includes a connecting line 111, a first antenna element 112, and a second antenna element 113.

The power-receiving device 1 is connected to a controller (MCU) via a wired connection and is configured to transmit data related to power reception to the MCU. For example, the power-receiving device may feed back an amount of received power to the MCU. The circuit 12 may also have a function of the MCU. Alternatively, the circuit 12 may be configured to enable data communication with the MCU (not shown).

<Configuration of Substrate 10>

Specifically, the main body of the power-receiving device 1 is configured in a multilayer structure. The FPC (flexible substrate), which is a type of substrate 10, may be provided with a printed wiring board (substrate). In particular, the FPC is provided with the multi-antenna 11 capable of receiving energy transmitted wirelessly in a three-dimensional space.

The FPC may have flexibility. For example, the FPC may be formed using a thin insulating material (plastic film). Therefore, the sheet-like power-receiving device 1 can be rolled together with the built-in FPC.

<Configuration of Multi-Antenna 11>

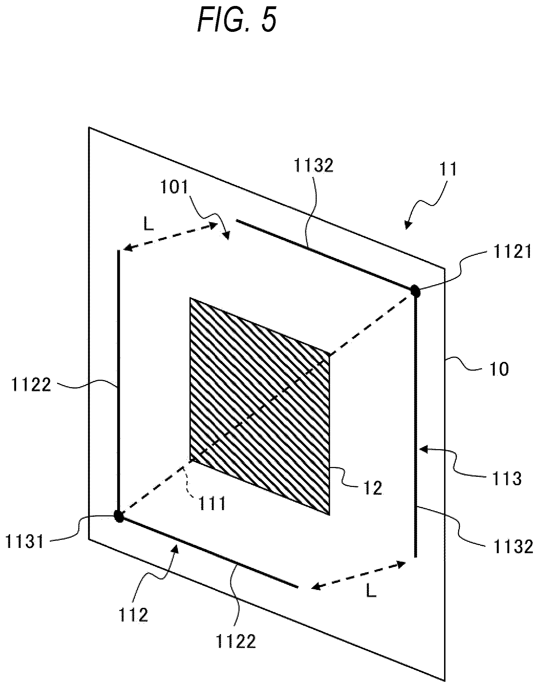

FIG. 5 is a perspective view of a single unit of a multi-antenna arranged on an FPC.

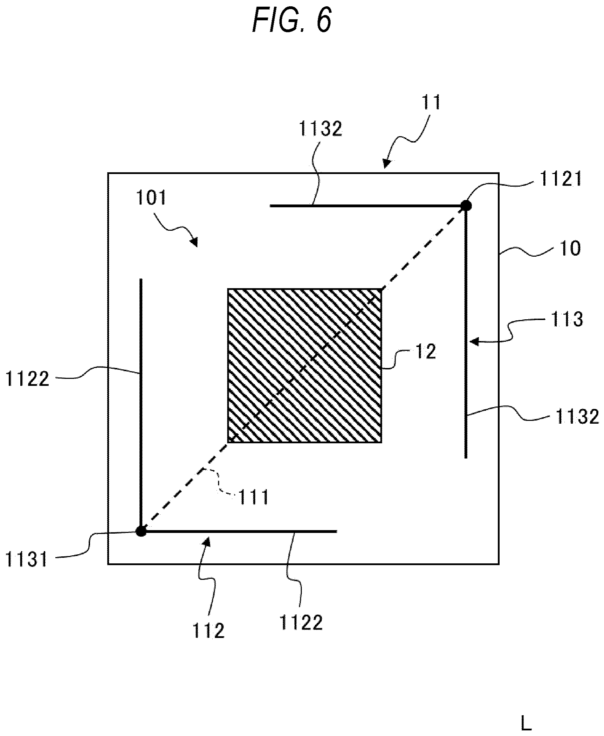

FIG. 6 is a diagram showing a configuration of a first embodiment of the multi-antenna (first embodiment).

The FPC may be provided with only one multi-antenna 11.

The FPC may be provided with a plurality of multi-antennas 11.

The multi-antenna includes linear antennas, such as linear dipole antennas, arranged on the FPC (substrate 10).

The first antenna element 112 includes a first feeding point 1121 and two linear antennas 1122 extending in two different directions from the first feeding point 1121. The second antenna element 113 includes a second feeding point 1131 and two linear antennas 1132 extending in two different directions from the second feeding point 1131.

Note that the number of antenna elements included in the multi-antenna 11 need not be two, and antenna elements more than two may be included; that is, the multi-antenna 11 according to the present disclosure is a multi-antenna including at least two antenna elements.

The two linear antennas 1122 of the first antenna element 112 are preferably arranged to intersect at a right angle of 90 degrees at the first feeding point 1121. The two linear antennas 1132 of the second antenna element 113 are preferably arranged to intersect at a right angle of 90 degrees at the second feeding point 1131.

Specifically, the two linear antennas 1122 and 1132, included in the first antenna element 112 and the second antenna element 113, respectively, have an L-shaped bent configuration with the first feeding point 1121 and the second feeding point 1131 as respective vertices, and are formed to extend in two directions at a right angle of 90 degrees from the first feeding point 1121 and the second feeding point 1131, respectively. Preferably, the linear antennas 1122 and 1132 are formed to extend from the first feeding point 1121 and the second feeding point 1131 with substantially the same length, respectively.

This makes it possible to suppress electromagnetic coupling caused by interference between the linear antennas 1122 and 1132, thereby improving the power reception efficiency. Additionally, by reducing the number of linear antennas, the manufacturing cost can be reduced.

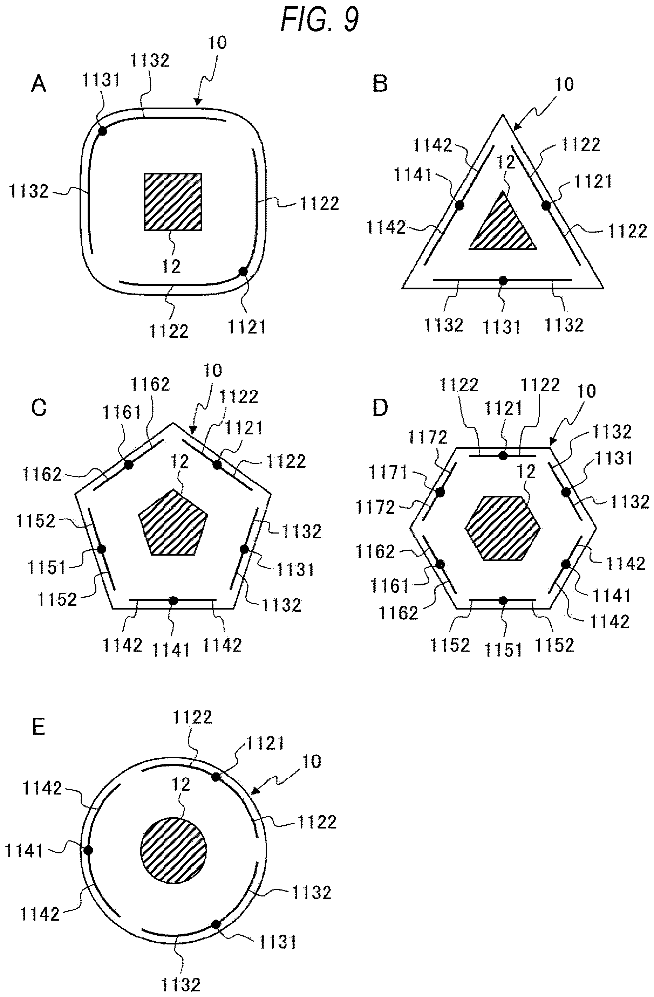

Note that the linear antennas 1122 and 1132 are configured symmetrically, but may be configured partially asymmetrically in implementation. The linear antennas 1122 and 1132 do not necessarily need to have a straight-line shape. For example, the linear antennas may be formed in a curved shape, as shown in FIG. 4 and C of FIG. 9.

The first antenna element 112 and the second antenna element 113 are arranged to surround one region 101 of the substrate 10.

Specifically, the first antenna element 112 and the second antenna element 113 are formed to extend along four sides of the region 101 of an approximately regular polygonal shape.

The two linear antennas 1122 and 1132, which are respectively formed in an L-shaped bent configuration with the first feeding point 1121 and the second feeding point 1131 as respective vertices, are arranged point-symmetrically about a center of the region 101 so as to surround one region 101 of the substrate 10. As a result, the first antenna element 112 and the second antenna element 113 are arranged facing each other so as to surround the substantially square region 101.

For example, a length of one side of the substrate 10 is approximately 8 cm, and lengths of the linear antennas 1122 and 1132 of the first antenna element 112 and the second antenna element 113 are approximately 7 cm. The circuit 12 is formed in a square shape, and a length of one side is approximately 3.5 cm.

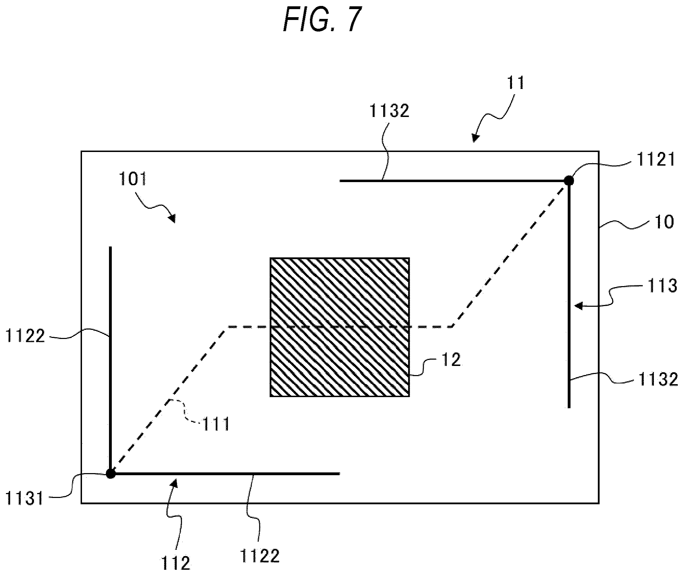

FIG. 7 is a diagram showing a configuration of a second embodiment of the multi-antenna (first embodiment).

The region 101 surrounded by the first antenna element 112 and the second antenna element 113 does not need to have a square shape and may have a rectangular shape. By arranging the antenna elements to surround the approximately square region 101, a multi-antenna with reduced manufacturing cost and superior reception performance can be implemented using a smaller-area substrate, compared to when the antenna elements are arranged to surround a rectangular region 101.

In addition, a distance from one end of the first antenna element to one end of the second antenna element close to one end of the first antenna element is preferably $\lambda/64$ or more, where $\lambda$ is the operating wavelength of the power-receiving device. In particular, the distance from one end of the first antenna element to one end of the second antenna element close to one end of the first antenna element is preferably $\lambda/32$ or more

Specifically, in FIG. 5, one end of the linear antenna 1132 of the first antenna element is spaced apart from one end of the linear antenna 1122 of the second antenna element by a distance L. Similarly, the other end of the linear antenna 1132 of the first antenna element is spaced apart from the other end of the linear antenna 1122 of the second antenna element by the distance L.

If the separation distance L is too small, the first antenna element and the second antenna element interfere with each other, causing electromagnetic coupling, which reduces the power reception efficiency. On the other hand, if the separation distance L is increased, the substrate area becomes larger, which leads to higher manufacturing costs.

Specifically, L is preferably $\lambda/64$ or more, more preferably $\lambda/32$ or more, where $\lambda$ is the operating wavelength of the power-receiving device. In addition, L may be a distance smaller than $\lambda$ or any integer multiple of $\lambda$. It is also acceptable that the distance be $\lambda/16$ or more.

<Configuration of Multi-Antenna 11 (modifications)>

A in FIG. 9 is a diagram showing a configuration of a first modification of the multi-antenna (first embodiment).

B in FIG. 9 is a diagram showing a configuration of a second modification of the multi-antenna (first embodiment).

C in FIG. 9 is a diagram showing a configuration of a third modification of the multi-antenna (first embodiment).

D in FIG. 9 is a diagram showing a configuration of a fourth modification of the multi-antenna (first embodiment).

E in FIG. 9 is a diagram showing a configuration of a fifth modification of the multi-antenna (first embodiment).

The number of antenna elements 112 and 113 included in the multi-antenna 11 of the present disclosure is not limited to two. In addition, the linear antennas 1122 and 1132 included in the antenna elements 112 and 113 may be arranged line-symmetrically rather than point-symmetrically so as to surround the region 101. Additionally, the region surrounded by the linear antennas does not need to have a polygonal shape, and may have a circular or elliptical shape.

As shown in A in FIG. 9, the linear antennas 1122 and 1132 of the first antenna element 112 and the second antenna element 113 may also be formed to extend in a curved shape along the four sides of the approximately square region 101 in which the circuit 12 is arranged.

As shown in B in FIG. 9, the linear antennas 1122, 1132, and 1142 may be arranged to surround a substantially equilateral triangular region 101 in which the circuit 12 is arranged. The linear antennas 1122, 1132, and 1142 form a line-symmetric equilateral triangle.

As shown in C in FIG. 9, the linear antennas 1122 to 1162 may be arranged to surround a substantially regular pentagonal region 101 in which the circuit 12 is arranged. The linear antennas 1122 to 1162 form a line-symmetric regular pentagon.

As shown in D in FIG. 9, the linear antennas 1122 to 1172 may be arranged to surround a substantially regular hexagonal region 101 in which the circuit 12 is arranged. The linear antennas 1122 to 1172 form a line-symmetric and point-symmetric regular hexagon.

As shown in E in FIG. 9, the linear antennas 1122, 1132, and 1142 may be arranged to surround a substantially true circular region 101 in which the circuit 12 is arranged. The linear antennas 1122, 1132, and 1142 form a circle.

<Configuration of Connecting Line 111>

The connecting line 111 is a DC connecting line that connects dipole antennas. Preferably, each antenna element has equal lengths on the left and right sides so as to form a balanced circuit. A rectifier is provided at the center. Each antenna is connected to the rectifier, and the antennas are connected via the connecting line 111. In this case, it is assumed that the rectifiers are connected with their polarities aligned.

In the present example, it should be understood that any type of rectifier can be applied.

In general, the connecting line 111 connecting the antenna elements is arranged so as to avoid a complicated configuration.

One end of the connecting line 111 is connected to the first feeding point 1121 of the first antenna element 112, and the other end of the connecting line 111 is connected to the second feeding point 1131 of the second antenna element 113. Note that when the number of antenna elements constituting the multi-antenna 11 is more than 2, the connecting line 111 connects the feeding points of the respective antenna elements.

The connecting line 111 is connected to the first feeding point 1121 and the second feeding point 1131 of the first antenna element 112 and the second antenna element 113 along a bisector of an internal angle formed with the first feeding point 1121 and the second feeding point 1131 of the first antenna element 112 and the second antenna element 113 as vertices.

Specifically, the connecting line 111 is connected to the first feeding point 1121 of the first antenna element 112 along the bisector of the internal angle formed by the two linear antennas of the first antenna element 112. The connecting line 111 is connected to the second feeding point 1131 of the second antenna element 113 along the bisector of the internal angle formed by the two linear antennas of the second antenna element 113.

Specifically, the connecting line 111 is connected to the first feeding point 1121 and the second feeding point 1131 of the first antenna element 112 and the second antenna element 113, respectively, via the connecting line 111 and rectifiers 1123 and 1133.

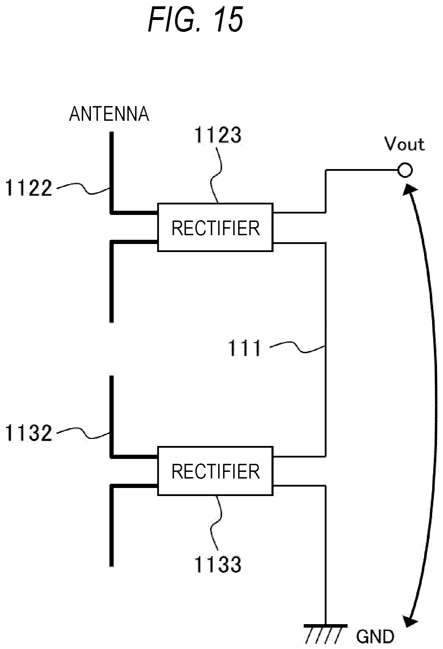

FIG. 15 shows a connection relationship among the antenna elements 112 and 113, the connecting line 111, and the rectifiers 1123 and 1133.

As a result, a large potential difference can be secured between the multi-antenna and the ground, thereby improving the performance of the multi-antenna.

<Configuration of Circuit 12>

The main body of the power-receiving device 1 has the built-in circuit 12 for enabling a function of a multi-antenna built in the FPC. The FPC and the circuit can be connected via a wired connection.

Any device may be added to the circuit 12 to improve the flow of balanced current within the multi-antenna. For example, a filter, a mixer, and the like may be added.

The circuit 12 is provided at a position that does not overlap any antenna element included in the multi-antenna 11 when viewed from a direction orthogonal to the surface of the substrate 10.

For example, the circuit 12 may be provided in a central region of one region 101 of the substrate 10 surrounded by the first antenna element 112 and the second antenna element 113.

A distance from the first feeding point 1121 of the first antenna element 112 to the circuit 12 is preferably provided at approximately the same position as a distance from the second feeding point 1131 of the second antenna element 113 to the circuit 12.

As a result, by using the region of the circuit 12 as a means for suppressing electromagnetic coupling, a power-receiving device with reduced manufacturing cost and excellent power reception efficiency can be implemented using a small-area substrate.

Note that the multi-antenna 11 may include an antenna element other than the first antenna element 112 and the second antenna element 113. Even in such a case, the circuit 12 is preferably provided at a position that does not overlap any antenna element, including another antenna element.

This is because, if the antenna element and the circuit 12 overlap, electromagnetic coupling between the antenna element and the circuit 12 reduces the power reception efficiency.

Specifically, the first antenna element 112 and the second antenna element 113 are preferably spaced apart from the circuit 12 by a distance of $\lambda/8$ or more. In particular, the first antenna element 112 and the second antenna element 113 are preferably spaced apart from the circuit 12 by a distance of $\lambda/4$ or more.

Note that $\lambda$ is the wavelength (operating wavelength) of electromagnetic waves (microwaves) used to receive energy. The wavelength $\lambda$ can be obtained as $\lambda(m) = c(m/s) \div f(Hz)$, based on the operating frequency f (Hz). c(m/s) is the speed of light.

This makes it possible to suppress electromagnetic coupling between the antenna element and the circuit 12, thereby implementing a power-receiving device with excellent power reception efficiency.

The shape of the circuit 12 may be formed so as to extend in a direction opposite to the directivity of the first antenna element 112 and the second antenna element 113.

The directivity of the first antenna element 112 is directed outward from the inside of the region 101, along a direction passing through the first feeding point 1121. In addition, the directivity of the second antenna element 113 is directed outward from the region 101, along a direction passing through the second feeding point 1131.

In this case, the circuit 12 is formed in a rectangular shape when viewed from a direction orthogonal to the surface of the substrate 10. In the present disclosure, a first vertex 121 and a second vertex 122 of the quadrangular circuit 12 may be recessed or notched in directions away from the first feeding point 1121 of the first antenna element 112 and the second feeding point 1131 of the second antenna element 113, respectively.

In addition, the circuit 12 may be rotated by 45 degrees and arranged in the region 101.

<Power-Receiving Device (second embodiment)>

The configuration of the power-receiving device 2 according to second embodiment will be described below. Note that the basic configuration is common to the power-receiving device 1 of first embodiment, and a description of the common configuration is omitted.

The power-receiving device 2 is a power-receiving device configured to receive energy transmitted wirelessly in a three-dimensional space based on wireless power transfer (WPT). Specifically, the power-receiving device 2 is a WPT power-receiving device used to receive energy transmitted from a power-transmitting device using microwaves.

The power-receiving device 2 includes a main body, a substrate 20 built in the main body, a multi-antenna 21 built in the main body, a circuit 22 for enabling a function of the multi-antenna 21 built in the main body, and a device 23. The power-receiving device 2 can receive microwaves transmitted from a power-transmitting device via the multi-antenna 21, and supply power to the circuit 22, the device 23, and the like.

The multi-antenna 21 includes a connecting line 211 and linear antennas 212 to 217.

<Configuration of Multi-Antenna 21>

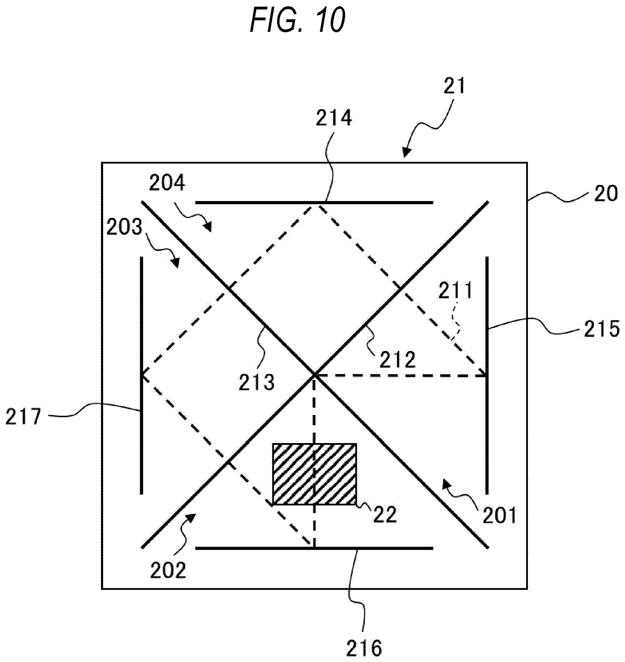

FIG. 10 is a diagram showing a configuration of a first embodiment of the multi-antenna (second embodiment).

The multi-antenna 21 includes two linear antennas 212 and 213 arranged in a substantially cross shape so as to divide the substrate 20 into four regions 201, 202, 203, and 204, and four linear antennas 214 to 217 arranged on four sides of a substantially quadrangular shape so as to surround the four regions 201, 202, 203, and 204, on the outermost side on the substrate.

Thus, the antenna length of the linear antenna can be made longer with the same substrate area. As a result, a power-receiving device with excellent power reception efficiency can be implemented.

Note that the linear antennas 212 to 217 do not necessarily need to have a straight-line shape. For example, the linear antennas may be formed in a curved shape.

Specifically, the two linear antennas 212 and 213 having the same length are arranged to intersect orthogonally at their respective central portions. In addition, the four linear antennas 214 to 217 arranged to surround the two orthogonally arranged linear antennas 212 and 213 from the outside are respectively arranged at an angle of 45 degrees with respect to the two linear antennas 212 and 213.

As a result, a power-receiving device with superior power reception efficiency can be implemented, compared to the power-receiving device (first embodiment).

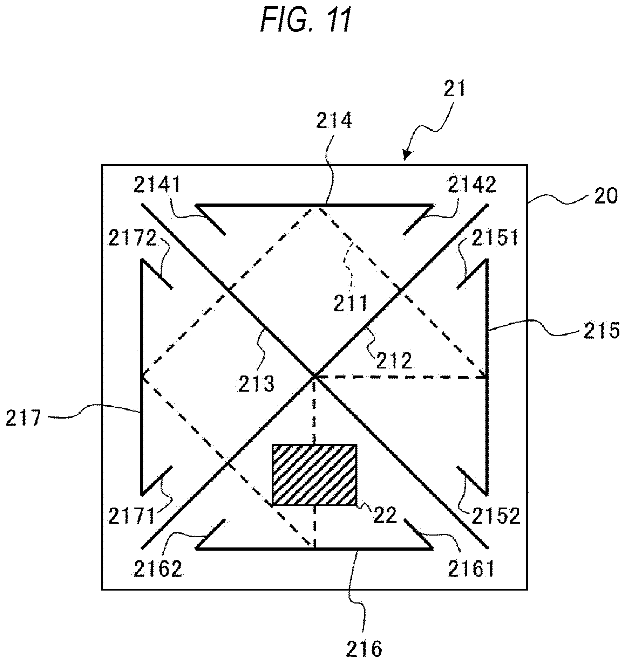

FIG. 11 is a diagram showing a configuration of a second embodiment of the multi-antenna (second embodiment).

At least one end of at least some of the four linear antennas 214 to 217 is bent toward the inside or outside of the four regions.

Specifically, both ends of the four linear antennas 214 to 217 have bent portions 2141 and 2142, 2151 and 2152, 2161 and 2162, and 2171 and 2172 bent toward the inside of the four regions, respectively.

In the present disclosure, as an example, all both ends of the four linear antennas 214 to 217 are bent toward the inside of the four regions. However, one end or both ends of some or all of the four linear antennas 214 to 217 may be bent toward the inside of the four regions.

Specifically, the four linear antennas 214 to 217 provided on the outer sides of the linear antennas 212 and 213 have both ends bent inward at an angle of 45 degrees, thereby forming bent portions 2141 and 2142, 2151 and 2152, 2161 and 2162, and 2171 and 2172.

Note that in the present disclosure, the bent portions 2141 and 2142, 2151 and 2152, 2161 and 2162, and 2171 and 2172 may be bent toward the outside of the four regions.

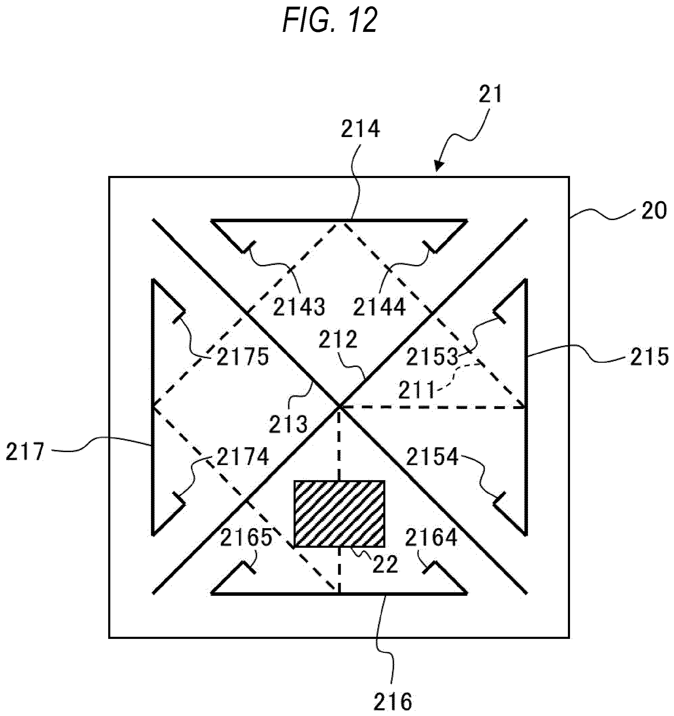

FIG. 12 is a diagram showing a configuration of a third embodiment of the multi-antenna (second embodiment).

At least one end of at least one of the four linear antennas 214 to 217 is folded back twice toward the inside or outside of the four regions.

Specifically, both ends of the four linear antennas 214 to 217 have bent portions 2143 and 2144, 2153 and 2154, 2163 and 2164, and 2173 and 2174 folded back twice toward the inside of the four regions, respectively.

The four linear antennas 214 to 217 provided on the outer sides of the linear antennas 212 and 213 have both ends folded back twice inward at angles of 45 degrees and 90 degrees, thereby forming folded-back portions 2143 and 2144, 2153 and 2154, 2163 and 2164, and 2173 and 2174.

Thus, the antenna length of the linear antenna can be made longer with the same substrate area. As a result, a power-receiving device with excellent power reception efficiency can be implemented.

Note that the folded-back portions 2143 and 2144, 2153 and 2154, 2163 and 2164, and 2173 and 2174 may be folded back twice toward the outside of the four regions.

<Configuration of Multi-Antenna 21 (Modifications)>

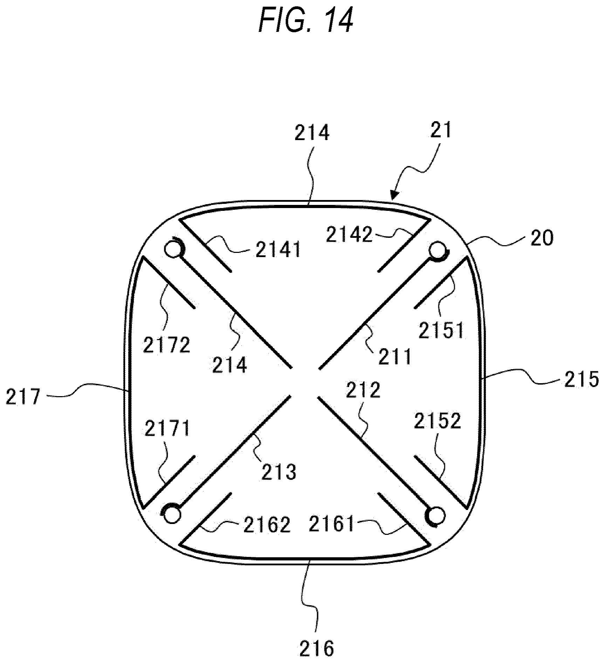

FIG. 14 is a diagram showing a configuration of a modification of the multi-antenna (second embodiment).

The number of linear antennas 212 to 217 included in a multi-antenna 21 of the present disclosure is not limited to six.

The four linear antennas 214 to 217 arranged on the four sides of a substantially quadrangular shape do not necessarily need to have a straight-line shape. For example, the linear antennas may be formed in a curved shape.

The two linear antennas 212 and 213 arranged in a substantially cross shape do not necessarily need to have a straight-line shape. For example, the linear antennas may be formed in a curved shape.

<Configuration of Connecting Line 211>

The connecting line 211 connects all six linear antennas 212 to 217 in a single-stroke manner in a clockwise or counterclockwise direction. Note that when the number of linear antennas constituting the multi-antenna 21 is more than 6, the connecting line 211 connects each linear antenna.

The connecting line 211 is connected at a 90 degree angle from an orthogonal portion of the two linear antennas 212 and 213 to a substantially central portion of the linear antenna 215. The linear antennas 212 and 213 each form an angle of 45 degrees with the connecting line 211.

As an example, a case is described in which the connecting line 211 connects all six linear antennas 212 to 217 in a single-stroke manner in a clockwise direction.

The connecting line 211 is connected at a 90 degree angle from an orthogonal portion of the two linear antennas 212 and 213 to a substantially central portion of the linear antenna 216. The linear antennas 212 and 213 each form an angle of 45 degrees with the connecting line 211.

The connecting line 211 is connected at an angle of 45 degrees to a substantially central portion of the linear antenna 216 and at an angle of 45 degrees to a substantially central portion of the linear antenna 217.

The connecting line 211 is connected at an angle of 45 degrees to a substantially central portion of the linear antenna 217 and at an angle of 45 degrees to a substantially central portion of the linear antenna 214.

The connecting line 211 is connected at an angle of 45 degrees to a substantially central portion of the linear antenna 214 and at an angle of 45 degrees to a substantially central portion of the linear antenna 215.

<Configuration of Circuit 22>

The circuit 22 is provided at a position that does not overlap any linear antenna included in the multi-antenna 21 when viewed from a direction orthogonal to the surface of the substrate 20.

For example, the circuit 22 may be provided at a position that does not overlap the linear antennas, inside any one of the four regions 201, 202, 203, and 204 defined by the linear antennas 212 to 217.

As a result, by using the region of the circuit 22 as a means for suppressing electromagnetic coupling, a power-receiving device with reduced manufacturing cost and excellent power reception efficiency can be implemented using a small-area substrate.

<Modifications>

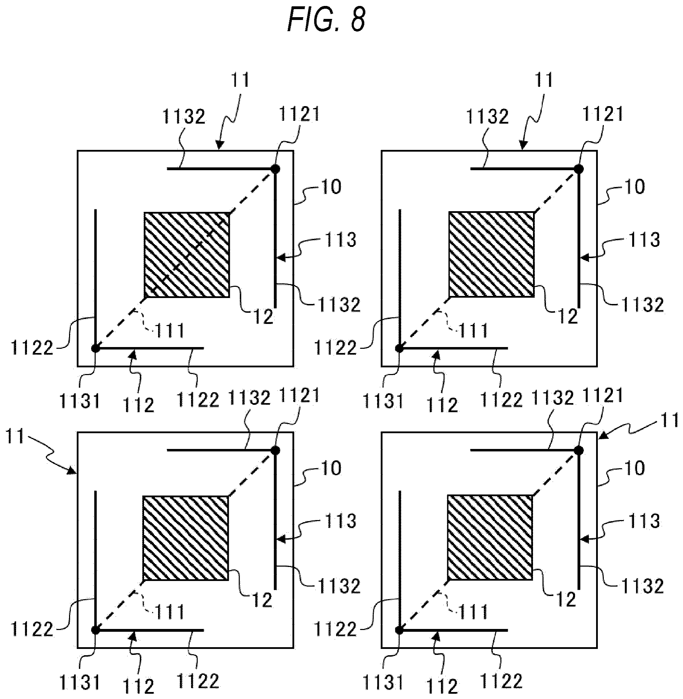

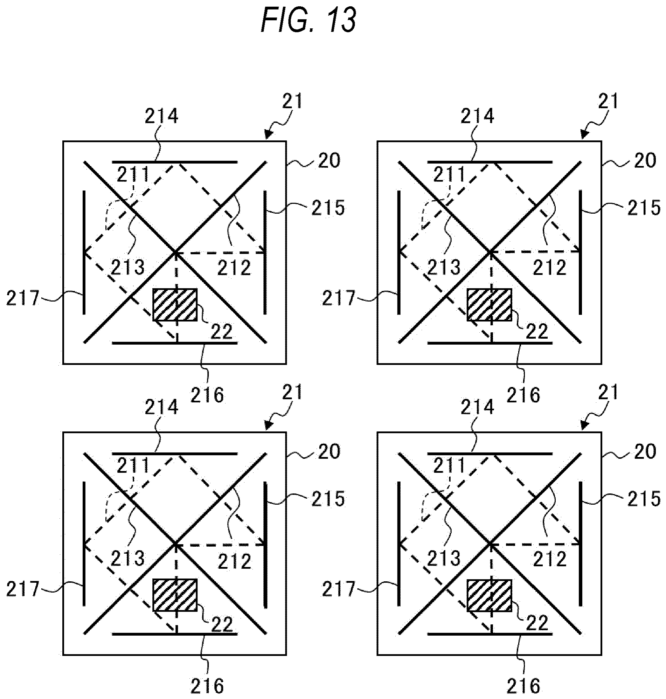

As shown in FIGS. 8 and 13, a plurality of multi-antennas 11, 21 may be arranged side by side in the vertical direction (y-axis direction) and/or the horizontal direction (X-axis direction). In this case, adjacent multi-antennas 11, 21 may be arranged so as to be offset (misaligned) with respect to each other. The offset spacing is arbitrary.

When arranging the plurality of multi-antennas 11, 21 side by side in the vertical direction (y-axis direction) and/or the horizontal direction (x-axis direction), the multi-antennas 11 according to first embodiment and the multi-antennas 21 according to second embodiment may be combined and arbitrarily arranged.

The adjacent multi-antennas 11, 21 may be arranged so as to be offset with respect to each other.

Any one of the plurality of multi-antennas 11, 21 may be rotated clockwise or counterclockwise.

When arranging the plurality of multi-antennas 21 side by side, they may be arranged side by side so as to share at least some of the outermost linear antennas 214 to 217.

In general, as described above, a dipole antenna is also called a 1/2λ (half-wavelength) dipole antenna, and its length d can be obtained based on the operating frequency f (Hz), as follows.

$$d = 3 \times 108/2f\,(m),$$

or

$$d = \{3 \times 108/2f\} \times (0.96\ to\ 0.97)(m)$$

Accordingly, one skilled in the art will be able to roughly understand the dimensions of each linear antenna included in the multi-antenna 11, 21 of the present example from the above description. However, it should be understood that the dimensions of each linear antenna included in the multi-antenna 11, 21 may be modified in various ways depending on the embodiment.

<Interface Substrate (third embodiment)>

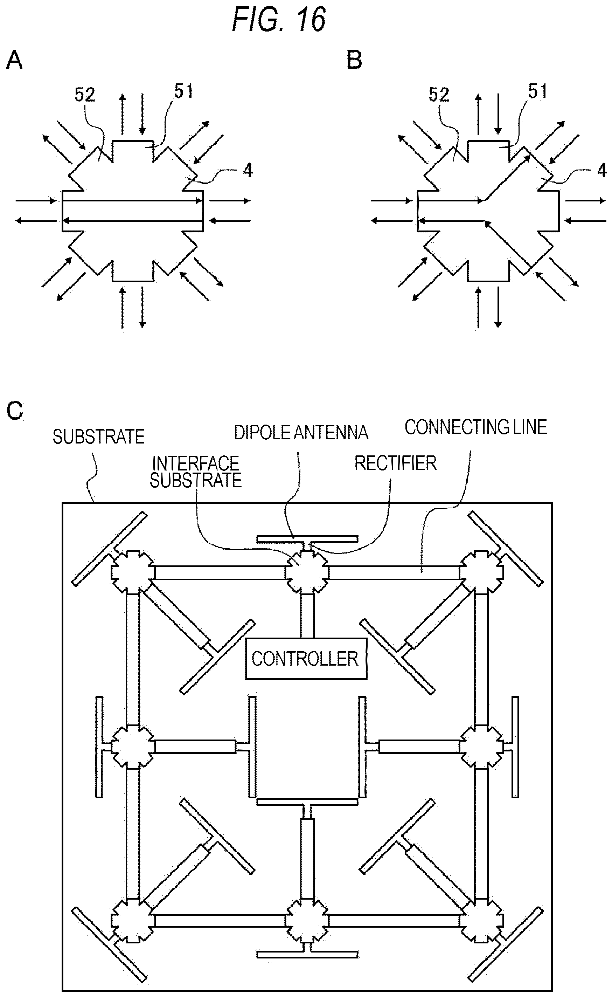

A and B in FIG. 16 are diagrams showing a configuration of an interface substrate (third embodiment).

C in FIG. 16 is a diagram showing an example of application of an interface substrate to a multi-antenna including a plurality of linear antennas.

Referring to A and B in FIG. 16, an interface substrate (small substrate) 51 that assists in the arrangement and connection of the linear antennas 1122, 1132, and 212 to 217, the connecting line 111, 211, and the like included in the multi-antenna 11, 21 is illustrated.

A main body 52 of the interface substrate 51 is configured as a polygonal model. In the present example, it is formed based on a regular octagon. In a regular octagon, all sides have the same length, each interior angle is 135 degrees, and the central angle is 45 degrees.

The main body 52 of the interface substrate 51 is formed in a substantially regular polygonal shape and is configured such that connectors capable of two-terminal connection can be arranged at respective corners 54 of the main body.

The interface substrate 51 facilitates application to each connection portion of the multi-antenna 11, 21, which can be geometrically symmetrical or fractally configured.

As illustrated in A and B in FIG. 16, the interface substrate 51 allows various current flow configurations within the main body 52 by using the connectors arranged at a plurality of corners.

The interface substrate 51 illustrated in A and B in FIG. 16 can be used in combination with linear antennas (dipole antennas) related to the multi-antenna 11, 21, rectifiers integrated with the linear antennas, and FPC cables.

By using such an interface substrate in plurality, various types of multi-antennas can be configured.

Referring to C in FIG. 16, an example of application of the interface substrate 51 to a multi-antenna including a plurality of linear antennas is shown.

Each linear antenna has a rectifier at its center, and is configured to be connectable to a connector of the interface substrate at that position. The interface substrate is configured to be connectable to an FPC cable or controller at a position of another connector.

The interface substrate has a switching mechanism inside, and can freely switch and select connections with the linear antennas, the FPC cables, and the controller.

The interface substrate 51 illustrated in A and B in FIG. 16 may also be configured as a switch so that the connection can be freely changed inside the main body 52.

As illustrated in A and B in FIG. 16, all the interface substrates 51 may be configured to have two inputs and two outputs when connected to antennas, or one input and one output when used as an intermediate connection for changing the direction.

By controlling the switch within the interface substrate from the controller, the multi-antenna can be reconfigured.

By using the interface substrate, all patterns can be connected with only three types of substrate patterns (component mounting is switched depending on the situation). In this case, all of the substrates may be flexible substrates with single-sided mounting. Therefore, it is advantageous in terms of design and manufacturing.

By using the interface substrate 51, adaptation to design changes of the multi-antenna is facilitated.

In addition, by using the interface substrate 51, it becomes possible to increase the resistance even when strong stress, heat, or other loads are applied to the multi-antenna.

Additionally, by joining the interface substrate 51 with solder, connectors, tape, or the like and accommodating it in a housing, integration into the environment is facilitated.

The multi-antenna and the flexible substrate according to the present example have been described with reference to FIGS. 5 to 18.

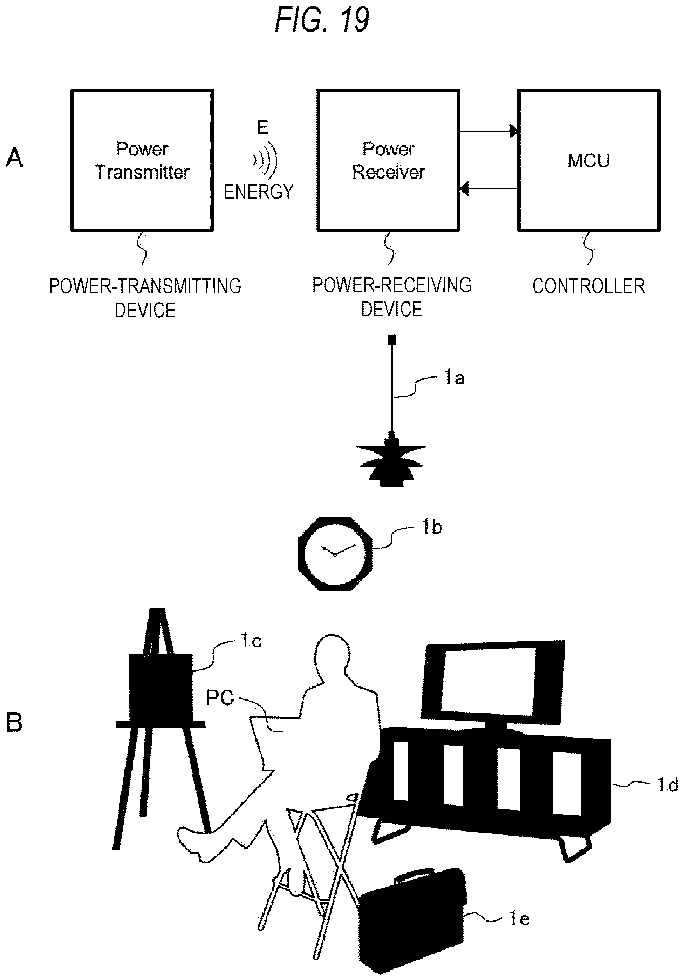

Next, the power-receiving device 1 including the multi-antenna and the flexible substrate illustrated in FIGS. 5 to 13 will be described with reference to A and B in FIG. 19.

<Comparison Test of Various Multi-Antennas>

Below, the comparison tests conducted by the applicant with various multi-antennas of the related art are described.

There are various methods for forming a multi-antenna using a plurality of linear antennas.

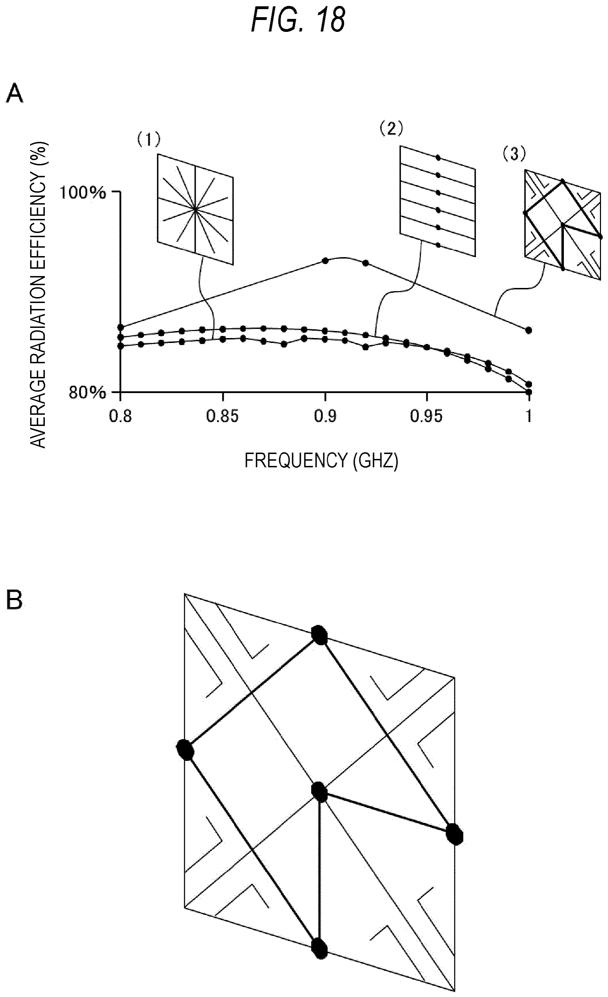

A in FIG. 18 is an example showing radiation efficiencies of various multi-antennas as (1) to (3).

B in FIG. 18 is an example showing a multi-antenna.

Referring to A in FIG. 18, the configurations and radiation efficiencies of various multi-antennas are illustrated as (1) to (3).

In (1) to (3), multi-antennas are each configured by combining six linear antennas within a square frame with a side length of 12 cm.

In the aspect of (1), a multi-antenna is illustrated in which a plurality of linear antennas, such as dipole antennas, are arranged radially so as to intersect at their respective center points. In this example, a total of six antennas are arranged such that two adjacent antennas form an angle of 30 degrees. In this case, connection is facilitated because each antenna can be connected at the center point.

In the aspect of (2), a multi-antenna is illustrated in which a plurality of linear antennas, such as dipole antennas, are arranged in parallel. In this example, a total of six antennas are arranged such that two adjacent antennas are spaced apart by a predetermined distance. Each antenna can be connected in a meander shape, being bent in a zigzag manner.

In the aspect of (3), compared to the aspects of (1) and (2), linear antennas such as six dipole antennas are arranged in a more complex manner. This example was devised by the applicant.

As shown in an enlarged view of B in FIG. 18, in the aspect of (3), two linear antennas are arranged in a substantially cross shape approximately at the center of the substrate, and further, linear antennas are arranged along the four sides of a square so as to surround the two linear antennas. Each of the outer linear antennas has both ends folded back inward at angles of 45 degrees and 90 degrees. Each antenna can be relatively easily connected along the black connecting line.

Referring to A in FIG. 18, the radiation efficiencies of the various multi-antennas of (1), (2), and (3) are shown in comparison.

In view of the practical frequency range, the comparison within the range of 0.8 GHz to 1.0 GHz shows that the multi-antenna of (3) exhibits the highest radiation efficiency. For example, at a frequency of 0.92 GHz, the radiation efficiency was confirmed to exceed approximately 90% when the ideal antenna performance is set to 100%. In contrast, the radiation efficiencies of the multi-antennas of (1) and (2) were confirmed to be approximately 85% at a frequency of 0.92 GHz when the ideal antenna performance is set to 100%.

As such, when configuring a multi-antenna by combining a plurality of linear antennas, various methods are used for the configuration.

It was confirmed that, when the multi-antenna is arranged as shown in B of FIG. 18, power can be received with relatively high efficiency. In this case, the power reception efficiency may be further increased by increasing the number of antennas.

However, there is a challenge in that the number of antennas is proportional to the substrate area (as the number of antennas increases, the substrate cost increases). That is, a multi-antenna with a small component mounting area and a large substrate area tends to have a higher manufacturing cost.

In addition, when a large number of linear antennas are densely arranged within a limited region, there is a concern that, if interference occurs between adjacent antennas, the power reception efficiency may be reduced.

Furthermore, there is a trade-off relationship between the amount of received power of a multi-antenna (optimally arranging a plurality of antennas over a large surface area) and appearance (making the antennas unnoticeable to humans).

In the present example, in view of the results of the above test, improvements were made to reduce the manufacturing cost while suppressing the performance degradation of the multi-antenna illustrated in (3). In particular, a multi-antenna is provided in which a plurality of linear antennas are arranged close to each other so as to improve space efficiency, and a circuit is arranged between the plurality of linear antennas so as to avoid or suppress electromagnetic coupling.

The term "multi-antenna" refers to multiple linear antennas (such as dipole antennas) arranged close to each other so as to improve space efficiency.

Note that to avoid or suppress electromagnetic coupling, each antenna may be connected by a connecting line (such as a DC connecting line).

The term "power-receiving device" refers to a device that uses a built-in multi-antenna to receive energy transmitted wirelessly from a separate power-transmitting device in a three-dimensional space.

<Application Examples of Power-Receiving Device 1, 2>

As described above, in the present example, energy can be wirelessly transmitted to a PC, a sensor, an actuator, a robot, devices 13 and 23, and the like, using WPT (wireless power transfer). The embodiment can be configured in various ways.

A in FIG. 19 is a schematic diagram showing an example in which a power-receiving device is applied in the field of building management.

B in FIG. 19 is a schematic diagram of the use aspect of the power-receiving device.

Referring to A in FIG. 19, an application example of the WPT power-receiving device 1, 2 is schematically illustrated. As shown in the above drawing, a power-transmitting device is provided outside the power-receiving device 1, 2, and the power-transmitting device transmits energy E to the outside. The multi-antenna 11, 21 built in the power-receiving device 1, 2 is configured to receive the energy E transmitted wirelessly from the outside. The power-receiving device 1, 2 can be connected to the MCU (controller) via a wired connection and transmit data related to power reception to the MCU. For example, the power-receiving device may feed back an amount of received power to the MCU.

Referring to B in FIG. 19, a schematic diagram regarding the use aspect of the power-receiving device 1, 2 is shown. As described above, the power-receiving device 1, 2 including the multi-antenna 11, 21 configured in a planar, curved or three-dimensional manner can be used in various forms, such as a desk mat or an object. In B in FIG. 19, other forms of the power-receiving device 1 are schematically illustrated using the reference sings 1, 2.

For example, the power-receiving device 1, 2 may be configured as a desk mat, a mouse pad, a table mat, a plastic mat, a protective mat, and the like. Places where the power-receiving device 1, 2 is installed include, for example, an office desk, a dining table, the top of a shelf, or the like. The power-receiving device 1, 2 may receive power transmitted from a power transmitting device located outside the desk, and use the power to supply power to an electronic device placed on the power-receiving device 1, 2, such as a personal computer, a mouse, a smart phone, and a camera. Power supply from the power supply device 1, 2 to the electronic device may be performed in a wireless or wired manner. By adopting this configuration, the wiring above the power-receiving device 1, 2 can be eliminated or reduced.

The main body of the power-receiving device 1, 2 is preferably configured in a multilayer structure and includes a front surface and a rear surface. Of the two opposite surfaces, either one (for example, the rear surface) may be brought into contact with the surface of the desk, and the other (e.g., the front surface) may be used as a working surface on the desk.

The power-receiving device 1, 2 can be configured such that both the front and rear surfaces can be used as working surfaces (reversible type). The front and rear surfaces may each have the same color or the same material, for example. Alternatively, the front and rear surfaces may have different colors or different materials, respectively. For example, the front and rear surfaces may each be configured using resin or the like.

The FPC (flexible substrate) 4 is interposed in a sandwich shape between the front and rear surfaces. The FPC may be provided with a printed wiring board (substrate). In particular, the FPC is provided with a multi-antenna capable of receiving energy transmitted wirelessly in a three-dimensional space.

As such, the multi-antenna cannot be visually recognized from the outside. Accordingly, it becomes possible to arrange the multi-antenna without impairing the appearance of the surrounding environment.

For example, the power-receiving device 1, 2 may be suspended from the ceiling in a three-dimensional space. For example, the power-receiving device 1, 2 may be arranged in the form of a lighting fixture suspended from the ceiling by a cord, a chain, or the like. A multi-antenna may be arranged using a flat or curved surface of a shade or umbrella of a lighting fixture. The power-receiving devices 1 and 2 may take any form that can be suspended from the ceiling, in addition to a lighting fixture.

For example, the power-receiving device 1, 2 may be attached to the wall of a room in a three-dimensional space. For example, the power-receiving device 1, 2 may be arranged in the form of a wall clock attached to a wall, a pillar, or the like by a nail or the like. The multi-antenna may be arranged using the dial surface of a wall clock. The power-receiving device 1, 2 may take any form that is attached to a wall or pillar, in addition to a clock.

For example, the power-receiving device 1, 2 may be in the form of standing or self-standing on the floor in a three-dimensional space. For example, the power-receiving device 1, 2 may be arranged in the form of a frame or board for a picture or poster on an installation stand, such as a tripod, provided on a floor. The multi-antenna may be arranged within a frame such as a bezel. The power-receiving device 1, 2 may also take any self-standing form on the floor, in addition to a picture or panel.

For example, the power-receiving device 1, 2 may be in the form placed on the floor in a three-dimensional space. For example, the power-receiving device 1, 2 may be arranged as a shelf or a desk. The multi-antenna may be arranged using at least one side surface of the shelf or desk. The power-receiving device 1, 2 may be in any form placed on the floor, in addition to a shelf or desk. For example, the power-receiving device 1, 2 may be configured such that the multi-antenna is arranged on a side surface of a sheet or an object placed on a desk.

For example, the power-receiving device 1, 2 may be in a form that is movable in a three-dimensional space. For example, the power-receiving device 1, 2 may be arranged on one side of a business bag or a carry bag. For example, a multi-antenna may be arranged using the substantially rectangular rear surface of a business bag or a carry bag. The power-receiving device 1, 2 may also take any movable form other than a bag. For example, the power-receiving device 1, 2 may be configured such that a multi-antenna is arranged on a side surface of a mobile phone.

Additionally, the power-receiving device 1, 2 may also be arranged at the four corners of a desk. Additionally, the power-receiving device may be arranged on a side wall, ceiling, or floor of a room where the desk is placed.

The power device 1, 2 can wirelessly transmit energy to a PC (personal computer), a sensor, an actuator, a robot, a device, and the like, using WPT (wireless power transfer).

The target of the power transmission may also be, for example, a mobile phone, a PDA (Personal Digital Assistant), a wireless microphone, a wireless USB, a wireless theater, a wireless television, a wireless camera, a wireless headphone, a wireless mouse, a wireless keyboard, a wireless router, a wireless printer, or the like.

The power-receiving device 1, 2 may be connected to the targets via a wired connection. Any type of power storage device or the like may be interposed therebetween. Additionally, the power-receiving device 1, 2 may be integrated with the targets.

The power-receiving device 1, 2 includes the main body configured in a flexible sheet-like or other arbitrary shape, and the multi-antenna 11, 21 may be arranged on the FPC built in the main body.

The flexible substrate can be freely bent or folded, and a circuit pattern may also be formed thereon. The flexible substrate is also referred to as an FPC (Flexible Printed Circuit). There is also an FFC (Flexible Flat Cable), which allows wiring but does not allow component mounting.

In the present example, the multi-antenna 11, 21 is arranged on the substrate 10, 20, for example, on the flexible substrate 10, 20. The flexible substrate 10, 20 may include an FPC and an FFC.

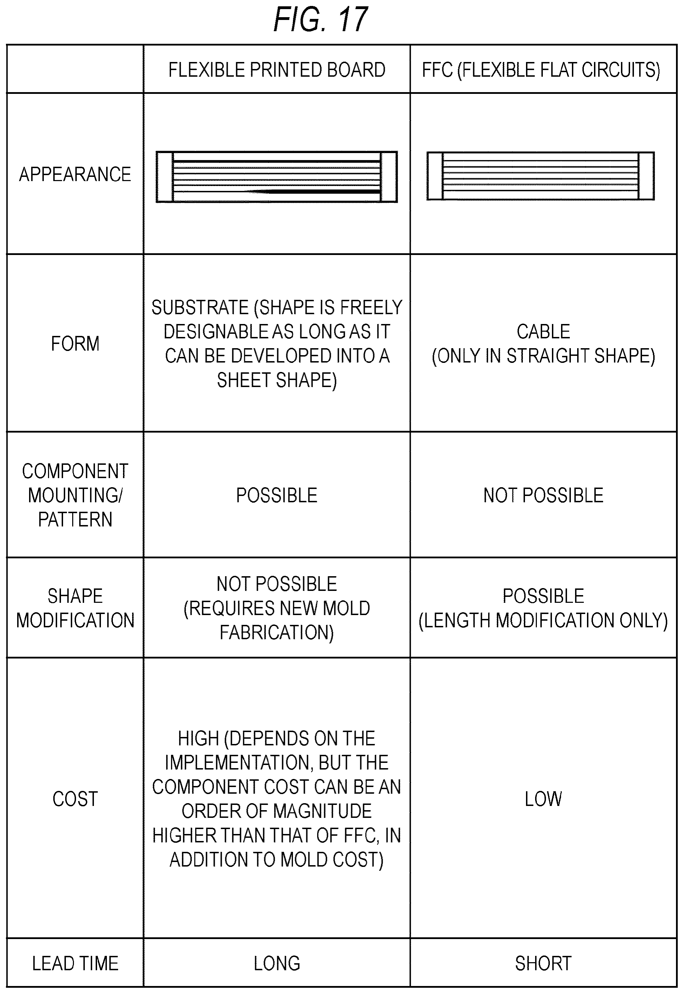

Referring to FIG. 17, for the flexible substrate 10, 20, FPC and FFC are compared from each perspective of appearance, shape, component mounting/pattern, shape change, cost, and lead time. As can be understood from FIG. 17, FPC and FFC each have their own advantages and disadvantages. In the present example, FPC and FFC can be used depending on the implementation environment.

Note that it should be understood that, in the present example, the shape, dimensions, material, and the like of the substrate on which the multi-antenna 11, 21 is arranged can be arbitrarily selected.

Within the main body or housing of the power-receiving device 1, 2, the FPC or FFC can be attached by any means. For example, for the attachment, solder bonding, connector mounting, copper foil tape adhesion, and the like may be used.

Solder bonding has the advantage of high mass productivity, but there is an issue in that deterioration of the substrate due to heat during bonding may occur.

Connector mounting has the advantage of easy reconfiguration, but there is an issue in that the thickness tends to increase due to the use of a connector.

Copper foil tape bonding has the advantage of being thin and free from heat, but there is an issue in terms of mass production.

In the present example, these methods can be used depending on the implementation environment.

Although the multi-antennas according to the present examples have been described with reference to the drawings, it should be understood that the present examples are not limited to the illustrated forms.

For example, the multi-antennas according to the present examples can be combined with a cover referred to as a radome that protects the antenna.

Additionally, the radome can increase the directivity of the antenna by generating reflected waves with a metal plate provided behind the antenna inside the radome.

Alternatively, the multi-antennas according to the present examples may use a metal plate installed on a wall, ceiling, or the like indoors to create a reflection condition.

In addition, in the above description, a dipole antenna has been exemplified as a linear antenna. However, it should be understood that the present examples are not limited to such a form.

For example, the multi-antennas according to the present examples may be used with a part or a plurality of parts thereof replaced with, or in combination with, another linear conductor such as a bow-tie dipole, a monopole antenna, or an inverted-F antenna.

In addition, the multi-antennas according to the present examples do not necessarily need to be entirely composed of straight linear antennas. The multi-antennas according to the present examples may be used with a part or a plurality of parts thereof replaced with, or in combination with, arrangements such as a meander shape bent in a zigzag manner or a star shape extending radially from approximately one point.

In addition, the multi-antennas according to the present examples may be used with a part or a plurality of parts thereof replaced with, or in combination with, an antenna utilizing the concept of a metamaterial. A metamaterial is an artificial medium that artificially creates characteristic physical phenomena in relation to the wavelength of electromagnetic waves by periodically arranging regular structures made of metals, dielectrics, or magnetic materials.

In addition, it should be understood that any device or the like can be added to the multi-antennas according to the present examples to improve the flow of balanced current. For example, depending on the embodiment, any device or the like that can be adopted in antenna technology of the related art, such as a shielding tube (Sperrtopf) or BALUN, may be added.

In addition, although the above description relates specifically to power reception of energy transmitted wirelessly, the communication method thereof is arbitrary. For example, it should be understood that any communication method, such as wireless LAN or Bluetooth® (registered trademark), can be adopted.

Note that the present invention is not limited to the above-described examples and includes various modifications. For example, the above-described examples have been described in detail to facilitate understanding of the present invention and are not necessarily limited to including all of the configurations described. In addition, it is possible to replace a part of the configuration of one example with that of another example, and to add a configuration of another example to the configuration of one example. In addition, it is possible to add, delete, or replace a part of the configuration of each example with other configurations.

In addition, control lines and information lines are illustrated only to the extent deemed necessary for explanation, and do not necessarily represent all of the control and information lines included in the actual product. In practice, it may be considered that almost all components are interconnected.

Note that the above-described examples disclose at least the configurations recited in the claims.

<Additional Notes>

The matters described in each of the above embodiments are additionally described below.

(Note 1)

A multi-antenna including a substrate, a first antenna element including two linear antennas arranged to surround one region of the substrate and extending in two different directions from a first feeding point, a second antenna element including two linear antennas extending in two different directions from a second feeding point, and a connecting line connecting a feeding point of the first antenna element and a feeding point of the second antenna element, in which the connecting line is connected to a first feeding point of the first antenna element along a bisector of an internal angle formed with the first feeding point of the first antenna element as a vertex, and the connecting line is connected to a second feeding point of the second antenna element along a bisector of an internal angle formed with the second feeding point of the second antenna element as a vertex.

Accordingly, a multi-antenna with a small number of antennas, reduced manufacturing cost, and excellent reception performance can be implemented.

(Note 2)

In Note 1, the multi-antenna is used in a wireless power transfer (WPT) power-receiving device to receive energy transmitted via microwaves from a power-transmitting device.

Accordingly, a multi-antenna, which is inexpensive and has excellent power reception efficiency, for use in a WPT power-receiving device using microwaves can be implemented.

(Note 3)

In Note 1 or 2, the first antenna element and the second antenna element are arranged to surround a region having a substantially polygonal shape.

Accordingly, a multi-antenna with reduced manufacturing cost and excellent reception performance can be implemented using a small-area substrate having a regular polygonal shape, such as a square, regular triangle, regular pentagon, or regular hexagon.

(Note 4)

In any one of Notes 1 to 3, the first antenna element and the second antenna element are symmetrically arranged to surround one region of the substrate.

Accordingly, a multi-antenna with reduced manufacturing cost and excellent reception performance can be implemented using a small-area substrate.

(Note 5)

In any one of Notes 1 to 4, the first antenna element and the second antenna element are connected to the connecting line via a rectifier.

Accordingly, a large potential difference can be secured between the multi-antenna and the ground, thereby improving the performance of the multi-antenna.

(Note 6)

In any one of Notes 1 to 5, a distance from one end of the first antenna element to one end of the second antenna element close to the one end of the first antenna element is $\lambda/64$ or more where $\lambda$ is an operating wavelength of a power-receiving device.

This makes it possible to suppress electromagnetic coupling caused by interference between the antenna elements. A multi-antenna with reduced manufacturing cost and excellent reception performance can be implemented using a small-area substrate.

(Note 7)

In Note 6, a distance from the one end of the first antenna element to the one end of the second antenna element close to the one end of the first antenna element is $\lambda/32$ or more where $\lambda$ is an operating wavelength of a power-receiving device.

This makes it possible to suppress electromagnetic coupling caused by interference between the antenna elements. A multi-antenna with reduced manufacturing cost and excellent reception performance can be implemented using a small-area substrate.

(Note 8)

A power-receiving device for receiving energy transmitted wirelessly in a three-dimensional space based on wireless power transfer (WPT), the power-receiving device including: a main body, one or more multi-antennas recited in Note 5 built in the main body, and a circuit built in the main body and functionally coupled to a rectifier, in which the circuit is provided inside the one region of a substrate surrounded by a first antenna element and a second antenna element such that the circuit does not overlap the antenna elements.

Accordingly, the circuit can suppress electromagnetic coupling between the first antenna element and the second antenna element, thereby improving the power reception performance of the antenna. In addition, by arranging the circuit in a region on the substrate surrounded by the antenna, the substrate area can be reduced by the circuit region, as compared to a case where a means for suppressing electromagnetic coupling, such as GND, is separately arranged in a region surrounded by the antenna. That is, by using the circuit region as a means for suppressing electromagnetic coupling, a power-receiving device with reduced manufacturing cost and excellent power reception efficiency can be implemented using a small-area substrate.

(Note 9)

In Note 8, the circuit is provided in a substantially central portion of the one region of the substrate surrounded by the first antenna element and the second antenna element.

As a result, by using the circuit region as a means for suppressing electromagnetic coupling, a power-receiving device with reduced manufacturing cost and excellent power reception efficiency can be implemented using a small-area substrate.

(Note 10)

In Note 8, a distance from the feeding point of the first antenna element to the circuit is substantially same as a distance from the feeding point of the second antenna element to the circuit.

As a result, by using the circuit region as a means for suppressing electromagnetic coupling, a power-receiving device with reduced manufacturing cost and excellent power reception efficiency can be implemented using a small-area substrate.

(Note 11)

In any one of Notes 8 to 10, the circuit is provided at a position that does not overlap any antenna element included in the multi-antenna when viewed in a direction orthogonal to a surface of the substrate.

As a result, by using the circuit region as a means for suppressing electromagnetic coupling, a power-receiving device with reduced manufacturing cost and excellent power reception efficiency can be implemented using a small-area substrate.

(Note 12)

In any one of Notes 8 to 11, a shape of the circuit is formed to extend in a direction opposite to directivity of the first antenna element and the second antenna element.

Accordingly, the distance between the antenna element and the circuit can be increased. A multi-antenna with reduced manufacturing cost and excellent power reception efficiency can be implemented using a small-area substrate.

(Note 13)

In any one of Notes 8 to 12, the first antenna element and the second antenna element are spaced apart from the circuit by a distance of $\lambda/8$ or more, where $\lambda$ is an operating wavelength of the power-receiving device.

Accordingly, a multi-antenna with reduced manufacturing cost and excellent power reception efficiency can be implemented using a small-area substrate.

(Note 14)

In any one of Notes 8 to 13, the first antenna element and the second antenna element are spaced apart from the circuit by a distance of $\lambda/4$ or more, where $\lambda$ is an operating wavelength of the power-receiving device.

Accordingly, a power-receiving device with reduced manufacturing cost and excellent power reception efficiency can be implemented using a small-area substrate.

(Note 15)

A power-receiving device for receiving energy transmitted wirelessly in a three-dimensional space based on wireless power transfer (WPT), the power-receiving device including: a main body, one or more multi-antennas built in the main body, and a circuit built in the main body, in which the multi-antenna includes a substrate, two linear antennas arranged in a substantially cross shape to divide the substrate into four regions, four linear antennas arranged on four sides of a substantially quadrangular shape to surround the four regions, on an outermost side on the substrate, and a connecting line connecting all six linear antennas in a single-stroke manner in a clockwise or counterclockwise direction, the circuit is provided inside any one of the four regions such that the circuit does not overlap the linear antennas, and the circuit is functionally coupled to the connecting line via a rectifier.

Accordingly, a multi-antenna with a small number of antennas, reduced manufacturing cost, and excellent reception performance can be implemented. Additionally, the circuit can suppress electromagnetic coupling between the linear antennas, thereby improving the power reception performance of the antenna. In addition, by arranging the circuit in a region defined on the substrate so as not to overlap the linear antennas, the substrate area can be reduced by the circuit region, as compared to a case where a means for suppressing electromagnetic coupling, such as GND, is separately arranged in one region. That is, by using the circuit region as a means for suppressing electromagnetic coupling, a power-receiving device with reduced manufacturing cost and excellent power reception efficiency can be implemented using a small-area substrate.

(Note 16)

In Note 15, at least one end of at least one of the four linear antennas is bent toward an inside or outside of the four regions.

Thus, the antenna length of the linear antenna can be made longer with the same substrate area. As a result, a power-receiving device with excellent power reception efficiency can be implemented.

(Note 17)

In Note 15, at least one end of at least one of the four linear antennas is folded back twice toward an inside or outside of the four regions.

Thus, the antenna length of the linear antenna can be made longer with the same substrate area. As a result, a power-receiving device with excellent power reception efficiency can be implemented.

(Note 18)

In any one of Notes 8 to 17, a device built in the main body and configured to function based on energy received from the multi-antenna is provided.

Thus, an IoT device such as a sensor and an actuator formed integrally with the multi-antenna can be operated. Accordingly, a small-sized power-receiving device that is formed integrally with a multi-antenna and is capable of functioning without wired power supply can be implemented.

REFERENCE SIGNS LIST

1: power-receiving device, 10: substrate, 11: multi-antenna, 12: circuit, 13: device, 2: power-receiving device, 20: substrate, 21: multi-antenna, 22: circuit, 23: device, 4: power-transmitting device

**Claims**

1. A multi-antenna comprising:

   a substrate; and
   a first antenna element including two linear antennas arranged to surround one region of the substrate and extending in two different directions from a first feeding point, and a second antenna element including two linear antennas extending in two different directions from a second feeding point; and
   a connecting line connecting the first feeding point of the first antenna element and the second feeding point of the second antenna element,
   wherein the connecting line is connected to the first feeding point of the first antenna element along a bisector of an internal angle formed by the two linear antennas with the first feeding point of the first antenna element as a vertex, and
   the connecting line is connected to the second feeding point of the second antenna element along a bisector of an internal angle formed by the two linear antennas with the second feeding point of the second antenna element as a vertex.

2. The multi-antenna according to claim 1, wherein the multi-antenna is used in a wireless power transfer (WPT) power-receiving device to receive energy transmitted via microwaves from a power-transmitting device.

3. The multi-antenna according to claim 1 or 2, wherein the first antenna element and the second antenna element are arranged to surround a region having a substantially regular polygonal shape.

4. The multi-antenna according to any one of claims 1 to 3, wherein the first antenna element and the second antenna element are symmetrically arranged to surround one region of the substrate.

5. The multi-antenna according to any one of claims 1 to 4, wherein the first antenna element and the second antenna element are connected to the connecting line via a rectifier.

6. The power-receiving device according to any one of claims 1 to 5, wherein a distance from one end of the first antenna element to one end of the second antenna element close to the one end of the first antenna element is $\lambda/64$ or more where $\lambda$ is an operating wavelength of a power-receiving device.

7. The power-receiving device according to claim 6, wherein the distance from the one end of the first antenna element to the one end of the second antenna element close to the one end of the first antenna element is $\lambda/32$ or more where $\lambda$ is an operating wavelength of a power-receiving device.

8. A power-receiving device for receiving energy transmitted wirelessly in a three-dimensional space based on wireless power transfer (WPT), the power-receiving device comprising:

a main body;
one or more multi-antennas according to claim 5 built in the main body; and
a circuit built in the main body and functionally coupled to the rectifier,
wherein the circuit is provided inside the one region of the substrate surrounded by the first antenna element and the second antenna element such that the circuit does not overlap antenna elements.

9. The power-receiving device according to claim 8, wherein the circuit is provided in a substantially central portion of the one region of the substrate surrounded by the first antenna element and the second antenna element.

10. The power-receiving device according to claim 8, wherein a distance from the first feeding point of the first antenna element to the circuit is substantially same as a distance from the second feeding point of the second antenna element to the circuit.

11. The power-receiving device according to any one of claims 8 to 10, wherein the circuit is provided at a position that does not overlap the antenna elements included in the multi-antenna, when viewed in a direction orthogonal to a surface of the substrate.

12. The power-receiving device according to any one of claims 8 to 11, wherein a shape of the circuit is formed to extend in a direction opposite to directivity of the first antenna element and the second antenna element.

13. The power-receiving device according to any one of claims 8 to 12, wherein the first antenna element and the second antenna element are spaced apart from the circuit by a distance of $\lambda/8$ or more, where $\lambda$ is an operating wavelength of the power-receiving device.

14. The power-receiving device according to any one of claims 8 to 13, wherein the first antenna element and the second antenna element are spaced apart from the circuit by a distance of $\lambda/4$ or more, where $\lambda$ is an operating wavelength of the power-receiving device.

15. A power-receiving device for receiving energy transmitted wirelessly in a three-dimensional space based on wireless power transfer (WPT), the power-receiving device comprising:

a main body;
one or more multi-antennas built in the main body; and
a circuit built in the main body,
wherein the multi-antenna includes:

a substrate;
two linear antennas arranged in a substantially cross shape to divide the substrate into four regions;
four linear antennas arranged on four sides of a substantially quadrangular shape to surround the four regions, on an outermost side on the substrate; and
a connecting line connecting all six linear antennas in a single-stroke manner in a clockwise or counterclockwise direction,

the circuit is provided inside any one of the four regions such that the circuit does not overlap the linear antennas, and
the circuit is functionally coupled to the connecting line via a rectifier.

16. The power-receiving device according to claim 15, wherein at least one end of at least one of the four linear antennas is bent toward an inside or outside of the four regions.

17. The power-receiving device according to claim 15, wherein at least one end of at least one of the four linear antennas is folded back twice toward an inside or outside of the four regions.

18. The power-receiving device according to any one of claims 8 to 17, comprising a device built in the main body and configured to function based on energy received from the multi-antenna.

## FIG. 1

FIRST INFORMATION PROCESSING DEVICE — 51

FIRST INFORMATION PROCESSING DEVICE — 51

SECOND INFORMATION PROCESSING DEVICE — 52

TRANSMITTING DEVICE — 4

TRANSMITTING DEVICE — 4

TRANSMITTING DEVICE — 4

POWER-RECEIVING DEVICE — 1, 2

POWER-RECEIVING DEVICE

POWER-RECEIVING DEVICE

POWER-RECEIVING DEVICE

POWER-RECEIVING DEVICE

POWER-RECEIVING DEVICE

POWER-RECEIVING DEVICE

FIG. 2

*FIG. 3*

A

1, 2

B

1, 2

## FIG. 4

## FIG. 5

FIG. 6

## FIG. 7

## FIG. 8

## FIG. 9

A

1131  1132  10

1132

1122

12

1122  1121

B

10

1142  1122
1141  12  1121
1142  1122

1132  1131  1132

C

1162  10  1122
1161  1122
1162  1121  1122

12

1132

1152

1151  1131

1152  1132

1142  1141  1142

D

1122  1122  10
1121

1172  1132

1171  1131

1172  12  1132

1162

1161  1142

1162  1141

1142

1152  1151  1152

E

1122

1121

12  10

1142

1122

1141

1142  1132

1131

1132

## FIG. 10

## FIG. 11

## FIG. 12

## FIG. 13

## FIG. 14

# FIG. 15

# FIG. 16

A

B

C

SUBSTRATE   INTERFACE SUBSTRATE   DIPOLE ANTENNA   RECTIFIER   CONNECTING LINE

CONTROLLER

## FIG. 17

|  | FLEXIBLE PRINTED BOARD | FFC (FLEXIBLE FLAT CIRCUITS) |
|---|---|---|
| APPEARANCE | | |
| FORM | SUBSTRATE (SHAPE IS FREELY DESIGNABLE AS LONG AS IT CAN BE DEVELOPED INTO A SHEET SHAPE) | CABLE (ONLY IN STRAIGHT SHAPE) |
| COMPONENT MOUNTING/ PATTERN | POSSIBLE | NOT POSSIBLE |
| SHAPE MODIFICATION | NOT POSSIBLE (REQUIRES NEW MOLD FABRICATION) | POSSIBLE (LENGTH MODIFICATION ONLY) |
| COST | HIGH (DEPENDS ON THE IMPLEMENTATION, BUT THE COMPONENT COST CAN BE AN ORDER OF MAGNITUDE HIGHER THAN THAT OF FFC, IN ADDITION TO MOLD COST) | LOW |
| LEAD TIME | LONG | SHORT |

# FIG. 18

A

B

# FIG. 19

A

Power
Transmitter

E
)))
ENERGY

Power
Receiver

MCU

POWER-TRANSMITTING
DEVICE

POWER-RECEIVING
DEVICE

CONTROLLER

1a

1b

B

1c

PC

1d

1e

## INTERNATIONAL SEARCH REPORT

| International application No. |
|---|
| **PCT/JP2024/004270** |

**A. CLASSIFICATION OF SUBJECT MATTER**

*H01Q 21/24*(2006.01)i; *H01Q 9/16*(2006.01)i; *H02J 50/20*(2016.01)i
FI: H01Q21/24; H01Q9/16; H02J50/20

According to International Patent Classification (IPC) or to both national classification and IPC

**B. FIELDS SEARCHED**

Minimum documentation searched (classification system followed by classification symbols)

H01Q21/24; H01Q9/16; H02J50/20

Documentation searched other than minimum documentation to the extent that such documents are included in the fields searched

Published examined utility model applications of Japan 1922-1996
Published unexamined utility model applications of Japan 1971-2024
Registered utility model specifications of Japan 1996-2024
Published registered utility model applications of Japan 1994-2024

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| A | JP 2021-141677 A (SEIKO HOLDINGS KABUSHIKI KAISHA, ABLIC INC.) 16 September 2021 (2021-09-16) entire text, all drawings | 1-18 |
| A | JP 2011-028660 A (FUJITSU SEMICONDUCTOR LTD.) 10 February 2011 (2011-02-10) entire text, all drawings | 1-18 |
| A | JP 2015-204497 A (SEIKO EPSON CORPORATION) 16 November 2015 (2015-11-16) entire text, all drawings | 1-18 |
| A | JP 2010-503356 A (KMW INC.) 28 January 2010 (2010-01-28) entire text, all drawings | 1-18 |
| A | US 10333332 B1 (ENERGOUS CORPORATION) 25 June 2019 (2019-06-25) entire text, all drawings | 1-18 |
| A | WO 2022/004561 A1 (DENSO CORPORATION) 06 January 2022 (2022-01-06) entire text, all drawings | 1-18 |

☐ Further documents are listed in the continuation of Box C.    ☑ See patent family annex.

| * Special categories of cited documents: | |
|---|---|
| "A" document defining the general state of the art which is not considered to be of particular relevance | "T" later document published after the international filing date or priority date and not in conflict with the application but cited to understand the principle or theory underlying the invention |
| "D" document cited by the applicant in the international application | "X" document of particular relevance; the claimed invention cannot be considered novel or cannot be considered to involve an inventive step when the document is taken alone |
| "E" earlier application or patent but published on or after the international filing date | |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
|---|---|
| **10 April 2024** | **23 April 2024** |

| Name and mailing address of the ISA/JP | Authorized officer |
|---|---|
| **Japan Patent Office (ISA/JP)** 3-4-3 Kasumigaseki, Chiyoda-ku, Tokyo 100-8915 Japan | |
| | Telephone No. |

Form PCT/ISA/210 (second sheet) (July 2022)

## INTERNATIONAL SEARCH REPORT
### Information on patent family members

International application No.

**PCT/JP2024/004270**

| Patent document cited in search report | | | Publication date (day/month/year) | Patent family member(s) | | | Publication date (day/month/year) |
|---|---|---|---|---|---|---|---|
| JP | 2021-141677 | A | 16 September 2021 | CN | 113362495 | A | |
| | | | | US | 2021/0281176 | A1 | |
| JP | 2011-028660 | A | 10 February 2011 | (Family: none) | | | |
| JP | 2015-204497 | A | 16 November 2015 | (Family: none) | | | |
| JP | 2010-503356 | A | 28 January 2010 | CN | 101548434 | A | |
| | | | | KR | 10-2008-0023605 | A | |
| | | | | US | 2009/0278759 | A1 | |
| | | | | WO | 2008/032951 | A1 | |
| US | 10333332 | B1 | 25 June 2019 | (Family: none) | | | |
| WO | 2022/004561 | A1 | 06 January 2022 | CN | 115917878 | A | |
| | | | | JP | 2022-012537 | A | |
| | | | | US | 2023/0096365 | A1 | |

Form PCT/ISA/210 (patent family annex) (July 2022)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2010041566 A

- WO 2018096740 A